(19) Europäisches Patentamt / European Patent Office / Office européen des brevets

(11) **EP 4 729 343 A1**

(12) **EUROPEAN PATENT APPLICATION**
published in accordance with Art. 153(4) EPC

(43) Date of publication:
**22.04.2026 Bulletin 2026/17**

(21) Application number: **24823767.9**

(22) Date of filing: **17.06.2024**

(51) International Patent Classification (IPC):
**B60L 53/30** (2019.01)   **H04W 4/44** (2018.01)
**H04W 4/80** (2018.01)   **H04W 84/12** (2009.01)
**H04W 4/40** (2018.01)

(52) Cooperative Patent Classification (CPC):
**B60L 53/30; H04W 4/40; H04W 4/44; H04W 4/80; H04W 84/12**

(86) International application number:
**PCT/KR2024/008307**

(87) International publication number:
**WO 2024/258251 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.06.2023 KR 20230077473**
**23.06.2023 KR 20230081441**
**03.07.2023 KR 20230086100**

(71) Applicants:
• **Hyundai Motor Company**
**Seoul 06797 (KR)**
• **Kia Corporation**
**Seoul 06797 (KR)**
• **Myongji University Industry and Academia Cooperation**
**Gyeonggi-do 17058 (KR)**

(72) Inventors:
• **SEONG, Jae Yong**
**Hwaseong-si, Gyeonggi-do 18280 (KR)**
• **SHIN, Min Ho**
**Yongin-si, Gyeonggi-do 17058 (KR)**

(74) Representative: **Viering, Jentschura & Partner mbB**
**Patent- und Rechtsanwälte**
**Am Brauhaus 8**
**01099 Dresden (DE)**

(54) **LOCALIZATION METHOD AND DEVICE FOR CHARGING ELECTRIC VEHICLE**

(57) A charging communication method for electric mobility charging according to the present invention includes the steps in which: an EVCC discovers a first EVSE within a range by using a first communication technology; the EVCC acquires information for positioning electric mobility to a charging position for receiving power supplied from the first EVSE by using a second communication technology; the EVCC performs communication connection and pairing with an SECC of the first EVSE by using the first communication technology after the electric mobility is positioned at the charging position.

FIG. 2

| WLAN | UWB | Robotics |
|---|---|---|

S210: Discovery & Configuration

S360: Secure Localization

S360: Secure Localization

S240: Connect & Pairing

S272: SessionSetup

S250: PairingConfirm

S260: PositionConfirm ← S360: Secure Localization

...

S270: ISO15118-20 Charging Communication

EP 4 729 343 A1

**Description**

[Technical Field]

The present disclosure relates to a charging communication technology for an electric vehicle (EV) having an automatic connection device (ACD). More particularly, the present disclosure relates to communication and localization technologies using a wireless local area network (WLAN) and an ultra-wide band (UWB) technology.

[Background Art]

The matters described in this section are provided merely as background information for understanding exemplary embodiments and do not constitute prior art.

Recently developed electric vehicles (EVs) drive motors using battery power, and have advantages such as fewer air pollutants such as exhaust gas and noise compared to conventional gasoline engine vehicles, fewer failures, long service life, and simple driving operation.

Electric vehicles may be classified into a hybrid electric vehicle (HEV), a plug-in hybrid electric vehicle (PHEV), and an electric vehicle (EV) depending on driving sources. An HEV includes an engine as a main power source and a motor as an auxiliary power source. A PHEV includes a motor as a main power source and an engine used when the battery is discharged. An EV includes a motor but does not include an engine.

An electric vehicle charging system may basically be defined as a system for charging a battery mounted in an electric vehicle by using power of a power distribution grid or an energy storage device. The electric vehicle charging system may have various forms depending on the type of electric vehicle. For example, the electric vehicle charging system may include a conductive charging system using a cable or a contactless wireless power transfer system.

During charging of an electric vehicle, a vehicle assembly (VA) mounted in the electric vehicle may form inductive resonant coupling with a transmission pad of a ground assembly (GA) located at a charge station or charging spots. The electric vehicle may charge its battery by using power delivered from the ground assembly through the inductive resonant coupling.

A robot arm or a manipulator may be used to supply power from an electric vehicle supply equipment (EVSE) to a charging door or port of an electric vehicle.

In this case, considering various types of electric vehicle charging doors, various types of electric vehicle supply equipment, and various charging methods, it is necessary to define procedures for positioning between an electric vehicle and a manipulator and procedures for a preparation stage for supplying power.

A message sequence between a grid and an electric vehicle (EV) may be performed by exchanging predefined request and response message pairs between a supply equipment communication controller (SECC) located on the grid side and an electric vehicle communication controller (EVCC) mounted in the electric vehicle.

An electric vehicle typically charges a vehicle battery through a charging method using an automatic connection device, a wireless power transfer method, an AC charging method, or a DC charging method. To charge the battery, the electric vehicle exchanges messages with the SECC relating to a session setup, a vehicle positioning setup, vehicle positioning, pairing, authentication and authorization setup, authentication and authorization, service discovery, service detail, and service selection.

For example, after the electric vehicle receives a vehicle-positioning-setup response message, when the electric vehicle cannot find a compatible method for positioning or pairing for the automatic connection device or the wireless power transfer, the electric vehicle may move to a service discovery state through service renegotiation in a session-stop state.

However, in related standards (e.g., ISO 15118) or in the prior art, an automatic connection device pantograph (ACDP) protocol for message sequencing between an electric vehicle and a grid is insufficient, and it is necessary to modify message parameters, and accordingly, a change in message sequence is required. In addition, in related standards or in the prior art, separate definitions of additional VSE (Vendor Specific Element) information parameters for an automatic connection device underbody (ACDU) or an automatic connection device sidearm (ACDS) are required.

[Disclosure]

[Technical Problem]

The objective of the present disclosure is to provide an improved charging communication and localization method and apparatus for an ACD using a first communication technology such as a wireless local area network (WLAN) and a second communication technology such as an ultra-wide band (UWB), based on ISO 15118.

Another objective of the present disclosure is to provide an improved charging communication method and apparatus in which, after an electric mobility discovers a power supply device or power supply equipment (EVSE) by using a first communication technology having various functions, the electric mobility and the power supply equipment obtain information for their location and/or positioning by using a second communication technology specialized for short-range communication, and the electric mobility may be positioned at a charging-capable position.

Another objective of the present disclosure is to provide an improved charging communication method and apparatus in which, after the electric mobility is positioned at a charging-capable position by using the second communication technology specialized for short-range communication, the charging preparation and charging process are performed by using the first communication technology having various functions.

Although various communication technologies may be used, each communication technology has strengths and weaknesses, and according to the present disclosure, selective application of communication technologies that may perform roles more effectively in various procedures of an electric mobility charging process is proposed.

In this process, by considering various types of electric mobility charging doors, various types of electric vehicle supply equipment, and various charging methods when supplying power from a power supply device or power supply equipment (EVSE) to an electric mobility, message types, data formats, and/or frame formats may be proposed so that positioning between the electric mobility and a charging manipulator and a preparation stage for supplying power may be performed.

[Technical Solution]

According to an aspect of an exemplary embodiment of the present disclosure, a charging communication method performed between a supply equipment communication controller (SECC) and an electric vehicle communication controller (EVCC) may be a charging communication method that is performed between an SECC associated with a primary assembly transmitting power to an electric mobility and an EVCC associated with a secondary assembly mounted in the electric mobility and receiving power from the primary assembly.

The communication method for charging an electric mobility according to an exemplary embodiment of the present disclosure may include discovering, by the EVCC, a first electric vehicle supply equipment (EVSE) within a range by using a first communication technology, obtaining, by the EVCC, information for positioning the electric mobility to a charging position for receiving power from the first EVSE by using a second communication technology, and after the electric mobility is positioned at the charging position, performing, by the EVCC, communication connection and pairing with a supply equipment communication controller (SECC) of the first EVSE by using the first communication technology.

The discovering of the first EVSE by using the first communication technology may include receiving, from a plurality of access points (APs) respectively associated with a plurality of EVSEs and using the first communication technology, a beacon message including a VSE (vendor specific elements) field including discovery information and configuration information, and determining one of the plurality of EVSEs as the first EVSE.

In this case, an EVSE corresponding to an ACD charger that is closest among the plurality of EVSEs may be determined as the first EVSE.

In the communication method for charging an electric mobility according to an exemplary embodiment of the present disclosure, the configuration information may include information describing a plurality of anchors respectively associated with each of the plurality of access points and each of the plurality of EVSEs and using the second communication technology, and information describing a charger of an ACD (Autoconnect/Automatic Charging Device) associated with each of the plurality of EVSEs.

The information describing the plurality of anchors may include channels or identifiers of the plurality of anchors, and the information describing the charger of the ACD may include identifiers of chargers of the ACD or mating spaces of the ACD.

The obtaining of information for positioning the electric mobility to the charging position by using the second communication technology may include receiving blink messages broadcast from a plurality of anchors using the second communication technology and time synchronized, and measuring a position of the electric mobility by a TDOA method using time differences among the blink messages.

The obtaining of information for positioning the electric mobility to the charging position by using the second communication technology may be performed at least twice for calculating the position of the electric mobility while the electric mobility is being positioned to the charging position. The electric mobility may be positioned to the charging position based on a calculation result of the position of the electric mobility.

The charging position may indicate a target position of the electric mobility satisfying a condition that an inlet of the electric mobility is located within a mating space of an ACD of the first EVSE.

In the discovering of the first EVSE, the electric vehicle communication controller (EVCC) may obtain configuration information including whether the first EVSE supports an ACD function, whether the first EVSE supports the second communication technology, and an identifier of an anchor or an ACD charger associated with the first EVSE.

One or more of the obtaining of information for positioning the electric mobility to the charging position or the performing of the communication connection and pairing by using the first communication technology may be performed by the EVCC based on the configuration information.

The performing of the communication connection and pairing with the supply equipment communication controller (SECC) of the first EVSE by using the first communication technology may include obtaining, based on the configuration information of the first EVSE, pairing information of the first EVSE including a randomly selected pairing identifier of the electric mobility, a position of the electric mobility, an ACD identifier of a first ACD associated with the first EVSE, or a mating space of the first ACD, and transmitting a communication association request message including the pairing information of the first EVSE to the SECC of the first EVSE.

The communication method for charging an electric mobility according to an exemplary embodiment of the present disclosure, after the performing of the communication connection and pairing between the EVCC and the SECC, may further include establishing a secure channel between the EVCC and the SECC; transmitting, through the secure channel, a pairing request message including a WLAN client MAC address of the electric mobility, a pairing identifier of the electric mobility, or location coordinates of an inlet of the electric mobility to the SECC; receiving, through the secure channel, a pairing response message including an ACD identifier of the SECC, an ACD mating space, or a BSSID of an AP associated with the SECC, from the SECC; and verifying, by the electric mobility, pairing information in the pairing response message.

The communication method for charging an electric mobility according to an exemplary embodiment of the present disclosure, after the performing of the communication connection and pairing between the EVCC and the SECC, may further include establishing a secure channel between the EVCC and the SECC; exchanging, through the secure channel, temporary security information or encoded security information for checking authenticity of blink messages broadcast from a plurality of anchors using the second communication technology between the EVCC and the SECC; identifying, by the EVCC, the blink messages based on the temporary security information or the encoded security information, and measuring, based on time synchronization information of the plurality of anchors from the identified blink messages, a position of the electric mobility; and verifying, by the EVCC, whether the position of the electric mobility is within a mating space of an ACD of the first EVSE.

In the communication method for charging an electric mobility according to an exemplary embodiment of the present disclosure, the first communication technology may be a WLAN (Wireless LAN) technology, and the second communication technology may be one of UWB, RFID, NFC, or IrDA.

According to an aspect of an exemplary embodiment of the present disclosure, an electric vehicle communication controller (EVCC) is arranged in an electric mobility and associated with a secondary assembly receiving power from a primary assembly. The EVCC may include a processor configured to receive and execute at least one instruction from a memory.

The processor may be configured to discover a first electric vehicle supply equipment (EVSE) within a range by using a first communication technology; obtain information for positioning the electric mobility to a charging position for receiving power from the first EVSE by using a second communication technology; and after the electric mobility is positioned at the charging position, perform communication connection and pairing with a supply equipment communication controller (SECC) of the first EVSE by using the first communication technology.

In the discovering of the first EVSE by using the first communication technology, the processor may be configured to receive, from a plurality of access points (APs) respectively associated with a plurality of EVSEs and using the first communication technology, a beacon message including a VSE (vendor specific elements) field including discovery information and configuration information; and determine one of the plurality of EVSEs as the first EVSE. In this case, an EVSE corresponding to an ACD charger that is closest among the plurality of EVSEs may be determined as the first EVSE.

In the EVCC according to an exemplary embodiment of the present disclosure, the configuration information may include information describing a plurality of anchors respectively associated with each of the plurality of access points and each of the plurality of EVSEs and using the second communication technology; and information describing a charger of an ACD (Autoconnect/Automatic Charging Device) associated with each of the plurality of EVSEs.

The information describing the plurality of anchors may include channels or identifiers of the plurality of anchors, and the information describing the charger of the ACD may include identifiers of chargers of the ACD or mating spaces of the ACD.

In the obtaining of the information for positioning the electric mobility to the charging position by using the second communication technology, the processor may be configured to receive blink messages broadcast from a plurality of anchors using the second communication technology and time synchronized; and measure a position of the electric mobility by a TDOA method using time differences among the blink messages.

According to an aspect of an exemplary embodiment of the present disclosure, a communication method for charging an electric mobility, performed by a supply equipment communication controller (SECC) associated with a primary assembly transmitting power to the electric mobility, the communication method for charging an electric mobility may include broadcasting, through an access point using a first communication technology, a beacon message including a VSE (vendor specific elements) field including discovery information and configuration information; broadcasting, through an anchor using a second communication technology, blink messages having a predetermined inter-anchor interval based on synchronized time information; and after the electric mobility is positioned at a charging position for receiving power from the primary assembly, performing, by using the first communication technology, communication connection and pairing with the electric mobility.

In the communication method for charging an electric mobility according to an exemplary embodiment of the present disclosure, the configuration information may include information describing the anchor associated with the access point and the primary assembly and using the second communication technology; and information describing a charger of an ACD (Autoconnect/Automatic Charging Device) associated with the primary assembly.

The information describing the anchor may include a channel or an identifier of the anchor, and the information describing the charger of the ACD may include an identifier of the charger of the ACD or a mating space.

In the communication method for charging an electric mobility according to an exemplary embodiment of the present disclosure, the charging position may indicate a target position of the electric mobility satisfying a condition that an inlet of the electric mobility is located within a mating space of an ACD of the primary assembly.

In the communication method for charging an electric mobility according to an exemplary embodiment of the present disclosure, the configuration information may include includes whether the primary assembly supports an ACD function, whether the SECC supports the second communication technology, and an identifier of the anchor or an ACD charger. The performing of the communication connection and pairing with the electric mobility by using the first communication technology may be performed based on the configuration information.

The communication method for charging an electric mobility according to an exemplary embodiment of the present disclosure, after the performing of the communication connection and pairing between the electric mobility and the SECC, may further include establishing a secure channel between the electric mobility and the SECC; receiving, through the secure channel, a pairing request message including a WLAN client MAC address of the electric mobility, a pairing identifier of the electric mobility, or location coordinates of an inlet of the electric mobility, from the electric mobility; and transmitting, through the secure channel, a pairing response message including an ACD identifier of the SECC, an ACD mating space, or a BSSID of an AP associated with the SECC, to the electric mobility.

[Advantageous Effects]

According to an exemplary embodiment of the present disclosure, the performance of charging communication and localization of an electric vehicle may be improved, and user convenience may be enhanced.

According to an exemplary embodiment of the present disclosure, in a charging communication method for charging an electric vehicle, a plurality of procedures such as discovery, localization, positioning, and/or pairing for communication between the electric vehicle or the EVCC and the power supply equipment (EVSE) or the SECC and for a charging process between a primary assembly and a secondary assembly may be performed more effectively by using two or more different communication techniques.

According to an exemplary embodiment of the present disclosure, effective message types, data formats, and/or frame formats may be provided so that procedures for positioning between an electric vehicle and a charging manipulator and for a preparation stage for supplying power may be performed by considering various types of electric vehicle charging inlets, various types of electric vehicle supply equipment, and various charging methods when supplying power from a power supply device or power supply equipment (EVSE) to an electric vehicle.

[Description of Drawings]

FIG. 1 is a conceptual diagram illustrating an architecture in which charging communication and localization for charging an electric vehicle are performed according to an exemplary embodiment of the present disclosure.

FIG. 2 and FIG. 3 are conceptual diagrams illustrating protocols of charging communication and localization using WLAN and UWB communication, which are capable of being employed in the architecture of FIG. 1, according to an exemplary embodiment of the present disclosure.

FIG. 4 is a conceptual diagram illustrating entities participating in a discovery and configuration process for charging communication and operations thereof according to an exemplary embodiment of the present disclosure.

FIG. 5 is a conceptual diagram illustrating entities participating in a localization process and operations thereof according to an exemplary embodiment of the present disclosure.

FIG. 6 is a conceptual diagram illustrating entities participating in a positioning process after localization and operations and results thereof according to an exemplary embodiment of the present disclosure.

FIG. 7 is a conceptual block diagram illustrating an internal structure of a computing system capable of implementing a charging communication device for an onboard ACD of a vehicle and/or an offboard ACD for an EVSE, a generalized ACD, a communication/communication control device included in the ACD, a SECC, an EVCC, a WLAN AP arranged for an EVSE, and a short-range communication device arranged in an electric vehicle or an ACD according to an exemplary embodiment of the present disclosure.

[Best mode of the Invention]

In addition to the above objects, another objects and features of the present disclosure will become more apparent through the description of exemplary embodiments with reference to the accompanying drawings.

For a clearer understanding of the features and advantages of the present disclosure, exemplary embodiments of the present disclosure will be described in detail with reference to the accompanied drawings. However, it should be understood that the present disclosure is not limited to particular embodiments disclosed herein but includes all modifications, equivalents, and alternatives falling within the spirit and scope of the present disclosure.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A and B" may mean "at least one of A or B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Meanwhile, one or more conventional components may be included in a configuration of the present disclosure if necessary, and such components will be described herein to an extent that it does not obscure the technical idea and concept of the present disclosure. If the description of the conventional components may obscure the technical idea and concept of the present disclosure, however, detailed description of such components may be omitted for simplicity.

For example, conventional technologies known to public before the filing of the present disclosure may be utilized in performing a setup, an association, a pairing, a localization, a positioning, and a docking/undocking control before charging an electric vehicle or in transmitting or receiving information required to perform the processes by applying mobile communication technologies such as Wi-Fi or 5G in a single-layer. At least some of the conventional technologies may be applied as a base technology for implementing the present disclosure.

However, the present disclosure is not intended to claim rights to these known technologies, and some of the conventional technologies may be included in the description of exemplary embodiments to enable to those skilled in the art to implement the exemplary embodiments without deviating from a scope of a technical concept of the exemplary embodiments.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by a conductive or inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a primary coil or GA coil, and the other one of the two coils may refer to a secondary coil or vehicle assembly VA coil.

"Supply Power Circuit (SPC)" or "Ground assembly (GA)": An assembly disposed on a primary device or the ground assembly or an infrastructure side including the primary coil (or GA coil) and other components. The other components may include at least one part to control the impedance and resonant frequency, a ferrite enforcing the magnetic path, and electromagnetic shielding materials. For example, the SPC or GA may include a power/frequency conversion unit and a SPC controller (or GA controller) necessary to function as a power source of a wireless power charging system, a wiring from the grid, and wirings between each unit, filtering circuits, and a housing.

"EV power circuit (EVPC)" or "Vehicle assembly (VA)": An assembly mounted in the vehicle including the secondary coil (or VA Coil) and other components. The other components may include at least one part to control the impedance and resonant frequency, a ferrite enforcing the magnetic path, and electromagnetic shielding materials. For example, the EVPC or VA may include a power/frequency conversion unit and a EVPC controller (or VA controller) necessary to as the vehicle part of a wireless power charging system, wiring to the vehicle batteries, and wirings between each unit, filtering circuits, and a housing.

The SPC may be referred to as or identified by the ground assembly (GA) or the like. Similarly, the EVPC may be referred to as or identified by the vehicle assembly (VA) or the like.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": An apparatus providing the contactless coupling to the secondary device. In other words, the primary device may be an apparatus external to an EV. When the EV is receiving power, the primary device may operate as the source of the power to be transferred. The primary device may include the housing and all covers.

"Secondary device": An apparatus mounted in the EV providing the contactless coupling to the primary device. In other words, the secondary device may be provided within the EV. When the EV is receiving power, the secondary device may transfer the power from the primary device to the EV. The secondary device may include the housing and all covers.

"Supply Power Electronics" indicates a portion of the SPC or GA regulating an output power level of the primary coil (or GA Coil) based on information from the vehicle. "EV Power Electronics" indicates a portion of the EVPC or VA monitoring specific on-vehicle parameters during the charging and initiating communications with the EVPC or GA to facilitate the adjustment of the output power level.

The Supply Power Electronics may be referred to as GA electronics, a GA controller, or a primary device communication controller (PDCC), and the EV Power Electronics may be referred to as VA electronics, a VA controller, or an electric vehicle communication controller (EVCC).

"Magnetic gap": A vertical distance between the plane of the higher of the top of the litz wire or the top of the magnetic material in the primary coil/GA Coil to the plane of the lower of the bottom of the litz wire or the magnetic material in the secondary coil/VA Coil when aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted in the vehicle to the ground surface.

"Secondary coil surface distance" or "VA coil magnetic surface distance": A distance between a plane of a nearest magnetic or conducting component surface to a lower external surface of the secondary coil or VA coil when mounted. Such a distance may include any protective coverings and additional items which may be packaged in the secondary coil or VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the EVPC or VA controller with the SPC or GA controller of the charging spot.

The correlation or association process may include a process of establishing a relationship between two peer communication entities.

"Command and control communications": Communications for exchanging information required for starting, controlling, and ending the wireless power transfer process between an electric vehicle supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may include at least one GA and at least one GA controller configured to manage the at least one GA. The GA may include at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

"Smart grid": A system implemented in which power plants, power generation units, and energy storage systems are connected in an intelligent manner through network facilities so as to exchange messages based on information and communication technologies.

"Original Equipment Manufacturer (OEM)": A server operated by a producer who manufactures the EV and may refer to a Root Certification Authority (RootCA) issuing an OEM RootCA Certificate.

"Charging station": A facility including one or more EVSEs, smart meters, and other technical equipment required to charge an EV.

"Electric Vehicle Supply Equipment (EVSE)": A device forming a part of the charging station that supplies energy to the electric vehicle via an outlet and being connected to a smart meter to measure an amount of transferred energy.

"Charging station (CS)" may refer to a facility that includes one or more EV power supply devices and may actually perform charging for an electric vehicle.

The charging station may include at least one GA and at least one GA controller configured to manage the at least one GA. The GA may include at least one wireless communication device. The charging station may refer to a place or location including at least one GA, which is provided in home, office, public place, road, parking area, etc.

"Charging station operator (CSO)": A party responsible for the provisioning and operation of a charging infrastructure and managing electricity to provide a requested energy transfer service. The charging station operator may be a term having a same concept as a charge point operator (CPO).

"Charge Service Provider (CSP)": An entity managing and authenticating EV user's credentials and providing the billing and other value-added services to customers. The CSP may be considered as a special type of the mobility operator (MO) and may be integrated with the MO.

"Charge Point Operator (CPO)": A company or organization having an authority over the location of the charging station to allow a physical access to the charging station; or a communication node or entity managing the charging station and authorizing and controlling a charging process that takes place at each individual EVSE using information and communication technologies.

"Mobility Operator (MO)": A legal entity establishing a contractual relationship with an end user or a business entity as a legal basis for an authorization and a payment for the charging at the charging station.

E-Mobility Provider (EMP), E-Mobility Service Provider (EMSP), and Mobility Service Provider (MSP) may be used with similar meanings to the mobility operator.

In addition, "mobility operator (MO)" may refer to a service provider that enters into a contractual relationship with an EV owner regarding charging, authorization, and payment so that an EV driver may charge the electric vehicle at a charging station.

"Clearing House (CH)": An entity handling cooperation between the MOs, CSPs, and CSOs. In particular, the clearing house may perform a role of an intermediate actor facilitating authorization, billing, and settling procedure for the EV charging service roaming, between two clearing parties.

"Roaming": Information changes and a scheme and provisions between CSPs, which allows EV users to access the charging services provided by multiple CSPs or CSOs pertaining to multiple e-mobility networks by using a single credential and contract.

"Credential": A physical or digital asset representing an identity of an EV or EV owner, and may include a password used to verify the identity, a public key and private key pair used in a public key encryption algorithm, a public key certificate issued by a certification authority, information related to a trusted root certification authority.

"Certificate": An electronic document binding a public key to an ID by a digital signature.

"Service session": A collection of services around a charge point related to the charging of an EV assigned to a specific customer in a specific timeframe with a unique identifier.

"Plug-and-Charge (PnC)": A process in which the authentication, authorization, load control, and payment are automatically performed without any additional user interaction when a user simply plugs the electric vehicle into the EVSE. Alternatively, the PnC may refer to an identification and authorization mode for such an automatic process. The PnC may be performed by applying X.509 certificates and transmitting and verifying a signature.

"Public Key Infrastructure (PKI)": A system for creating, storing, redistributing, and revoking digital signatures that are used to verify that a specific public key belongs to a specific person or entity.

"External Identification Means (EIM)": Any external means by which a driver can authenticate and authorize himself or herself for a charging session at the charging station. Examples include a cash payment, a prepaid card, a credit card, a debit card, an NFC, a RFID, and an SMS. The EIM may form two typical authentication modes together with the PnC.

"Sales tariff": A function of providing price-related information over time. The sales tariff may refer to an input provided by the mobility operator to enable the EVCC side to calculate a charging schedule based on the sales tariff. The sales tariff may be a concept intended to provide incentives to electric vehicles that charge within a specific time slot for a preferred amount of electricity. A use case related to the sales tariff may be information on the electricity price provided by the mobility operator that authenticates the charging session based on a valid contract, in which case the contract may be authenticated by the driver or a car sharing operator to which the vehicle belongs by a contract certificate installed in the electric vehicle.

Additionally, the term "sales tariff" used herein may refer to a concept intended to encourage the use of renewable energy such as electric energy acquired by solar panels or wind turbines by providing incentives to electric vehicles charged during predictable time slots by the renewable energy. In some cases, the sales tariff may include not only the information on the electricity price but also the time slot associated with the price information.

"Secondary actor": An entity other than the EVCC or the SECC involved in the charging process. The secondary actor may be involved in the charging process by providing information related to the charging process. Examples of the secondary actor may include a charge point operator (CPO) and the mobility operator (MO).

"E-Mobility Account Identifier (eMAID)" may refer to a unique identifier of an electric mobility that associates a contract certificate with a payment account of an EV owner.

"E-Mobility Account Identifier (EMAID)": A single contractual certificate issued for each legal contract concluded between the mobility operator and a customer for the electric vehicle charging. The EMAID may allow personal data to be pseudonymized and may be valid only for a limited time, e.g., the lifetime of the legal contract. Unlike the Vehicle Identification Number (VIN), the EMAID may not allow for a long-term evaluation of customer or vehicle data. The EMAID may be used as a temporary identifier that may be assigned using different authentication media for each temporary or short-term contract concluded for a family vehicle or a shared vehicle. A person may have a separate EMAID for each of several contracts with which the person is involved, so that the EMAIDs may be used for purposes other than personal identification information.

A term "vehicle-to-grid (V2G) communication" used herein is regulated in the ISO 15118 standard and can be designed to correspond to the Open Systems Interconnection (OSI) 7 layers. The OSI may be 'a conceptual model for standardizing communication functions of a communication or computing system regardless of an internal structure and technology involved.'

The ISO 15118 standard is characterized in that it is intended to establish and implement the charging and payment process for the electric vehicle and may adopt and utilize various information and communication technologies for this objective. Since the objective of the ISO 15118 standard is to establish the charging and payment process for the electric vehicle although the standard is related to the information and communication technology elements mapped to the OSI 7 layers, the special features of the application may be primarily addressed.

The V2G communication interface specified in the ISO 15118 standard may include digital, IP-based protocols. The communications between the EV and the EVSE and the communications between the EVCC and the SECC may be included in the V2G communication interface specified in the ISO 15118 standard.

The V2G communication interface and the ISO 15118 standard may be intended to enable a user-friendly mechanism for performing an authentication, authorization, and payment at the charging station without requiring a separate user interaction.

An electric vehicle may be integrated into the smart grid to provide a flexible load control and valuable grid services without compromising driver habits. To avoid the need for additional grid components to supply power during a peak demand caused by a variety of load fluctuations, the energy stored in the electric vehicle may be considered as one of energy sources in the smart grid. Furthermore, in order to encourage the long-term expansion of renewable energy sources, providing appropriate incentives to the electric vehicles may also be considered as a means to activate the smart grid.

The vehicle-to-grid transfer protocol of the OSI layer 5 ("V2GTP") may be understood as a session wrapper of application-layer messages exchanged between a vehicle and a grid. The application-layer messages at this time may be referred to as V2G messages. The V2GTP protocol may include a header and a payload definition that enable efficient differentiation and processing of V2G messages.

Autoconnect charging device or automatic charging device ("ACD") technology may be implemented based on the contents specified in ISO/IEC 15118 Edition 2 and ISO 15118-20, in which at least a portion of a charging process is performed by controlling a robot or an automated device by using wireless communication.

As exemplary embodiments of the ACD technology, types such as ACD-U (Underbody), ACD-S (Sidearm), or ACD-P (Pantograph) may be proposed based on an approaching direction of an ACD facility of an EVSE toward an electric mobility and/or based on a position of the EVSE-side ACD facility relative to the electric mobility. Additional ACD types may be included in the future with the expansion of wired or wireless charging technologies.

The ACD charging communication method described below may define a new namespace for ISO 15118-based ACD charging communication over WLAN, may change message parameters, may change message sequences, and may be configured to use a docking-undocking-pairing mechanism. The ACD charging communication method may also be configured to define VSE additional-information parameters for ACD-U or ACD-S.

Vendor specific element ("VSE") may refer to a data format that includes information about a type of an EVSE available at a current location in ISO 15118-based communication.

Exemplary embodiments of the present disclosure will now be described in detail with reference to the accompanying drawings. In the drawings, the same components may be designated by the same reference numerals to facilitate overall understanding of the disclosure, and duplicate descriptions thereof will be omitted for simplicity.

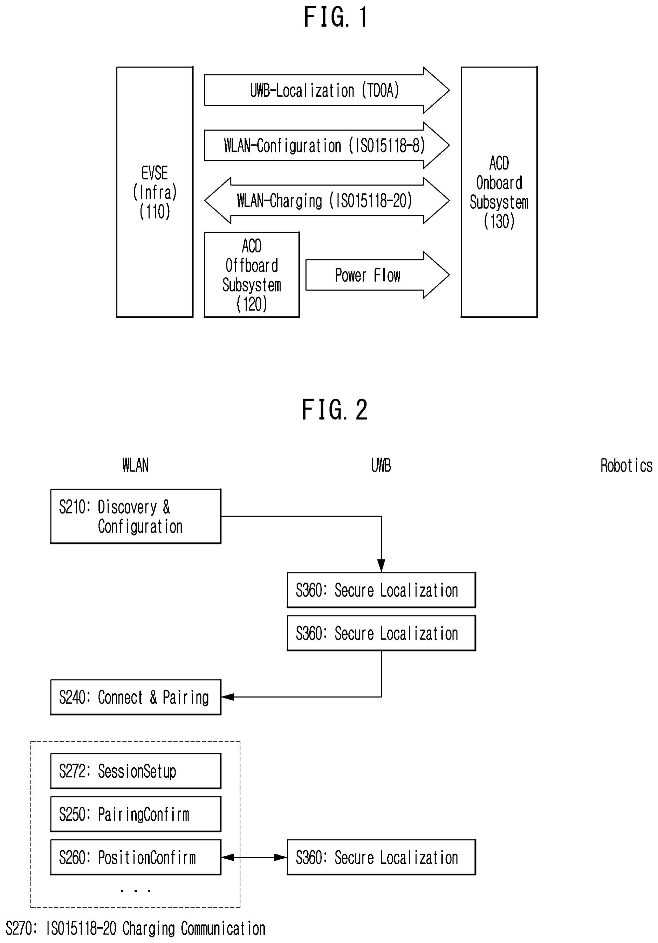

Hereinafter, detailed matters of the present disclosure are described through exemplary embodiments of FIG. 1 to FIG. 7.

FIG. 1 is a conceptual diagram illustrating an architecture in which charging communication for charging an electric mobility is performed according to an exemplary embodiment of the present disclosure.

In FIG. 1, although "electric vehicle" is written for convenience of description, the present disclosure may be applied to various types of electric mobility capable of traveling by using electric energy. The electric mobility may refer to not only mobility traveling using only electric energy but also various types of hybrid electric mobility capable of using another energy source together.

Even when various electric mobility are targeted, expressions such as EVSE may customarily refer to a device supplying electric energy, and expressions such as EVCC may refer to a controller performing electronic communication and control inside the electric mobility.

As shown in FIG. 1, an exemplary embodiment is illustrated in which a first communication technology such as WLAN and a second communication technology specialized for short-range communication are used for charging communication between an EVSE 110 corresponding to infrastructure, having an EVSE-side offboard ACD subsystem 120 connected thereto, and an EV-side onboard ACD subsystem 130 mounted in an electric mobility. An example of the second communication technology specialized for short-range communication may be a UWB technology, but, as described below, the present disclosure is not limited to UWB.

The EVSE 110 and/or the ACD offboard subsystem 120 may be associated with at least one access point (AP) for WLAN communication and at least one anchor for UWB communication. An SECC corresponding to the EVSE 110 may control or manage a part or all of operations related to communication of at least one AP and at least one anchor associated with the EVSE 110.

At least one access point (AP) for WLAN communication and at least one anchor for UWB communication may be mounted on the electric mobility. An EVCC of the electric mobility may control or manage a part or all of operations related to communication of at least one AP and at least one anchor mounted on the electric mobility.

For ACD-to-ACD control communication or EVSE-to-electric mobility control communication for operations based on position information, such as localization, positioning, and pairing of the electric mobility, the second communication technology such as UWB or BLE or other short-range communication technology may be used. In a localization process of the electric mobility by using the second communication technology within a charging site, a method such as TDOA may be used.

In the exemplary embodiment of FIG. 1, a first communication technology such as WLAN may be used for transmission and reception of configuration information related to charging of the electric mobility. A process of transmitting and receiving configuration information by using the first communication technology may refer to a known standard such as ISO 15118-8. For charging of the electric mobility, a process in which the electric mobility discovers and determines an ACD charger within a charging site may be performed by using a first communication technology such as WLAN with reference to a known standard such as ISO 15118-8. When the electric mobility determines one ACD charger among a plurality of EVSEs, the closest ACD charger may be selected. In addition, when the ACD charger is determined, whether the EVSE possesses an ACD function and whether an ACD function of the electric mobility and an ACD function of the ACD charger are mutually compatible may be considered.

According to an alternative exemplary embodiment of the present disclosure, a process in which the EVSE/ACD charger and the electric mobility discover each other and the ACD charger is determined within a charging site may be performed by cooperation of both the electric mobility and the EVSE/ACD charger.

Positioning of the electric mobility may be performed to position an inlet of the electric mobility into a mating space of a closest ACD charger. A localization result obtained by the second communication technology such as UWB may be used for positioning of the electric mobility.

According to an exemplary embodiment of the present disclosure, position confirmation of the electric mobility may be performed by using a separate secure TDOA method.

Pairing confirmation between the electric mobility and an ACD charger may be performed by using a pairing ID.

In a charging process, a communication technology specified in ISO 15118-2 and/or ISO 15118-20 may be used. Such communication technology may include the first communication technology such as WLAN and may also include a wired communication technology such as PLC. A communication protocol for charging of the electric mobility may include charging communication during detailed operations such as docking, charging, and undocking.

Referring again to FIG. 1, in an exemplary embodiment of the present disclosure, a second communication technology such as UWB may be applied to one-way communication transmitted from anchors of an EVSE or an ACD charger to an electric mobility side. Localization of the electric mobility may be performed by using TDOA on the one-way communication of the second communication technology.

Electric power may be supplied to the EVSE 110 from a power supply network (not shown), and electric power may be transferred from an onboard ACD 130 of the electric mobility to an electric power supply circuit (not shown) of the electric mobility.

Electric power may be supplied from an offboard ACD 120, which corresponds to a primary assembly, to an onboard ACD 130, which corresponds to a secondary assembly. For electric power to be supplied from the primary assembly to the secondary assembly, a docking operation between the primary assembly and the secondary assembly may be required, and after electric power is supplied, an undocking operation may be performed such that the primary assembly and the secondary assembly are separated.

For example, when the primary assembly and the secondary assembly correspond to an ACDS, a level-1 approach may be proposed.

Advantages of the level-1 approach may include that an existing charging communication protocol may be reused, for example, after docking.

Disadvantages of the level-1 approach may include that a complicated design for harmonizing different protocols for the same session may be required, and additional pairing between two channels may be required. For example, on an EV side, confirmation may be required that an SECC connected through a UWB channel and an SECC connected through a PLC channel correspond to the same SECC. Different methods may also need to be implemented for similar charging modes. When an ACDU uses a UWB+PLC technology and an ACDS uses a WLAN technology, additional design may be required accordingly. Authentication between an EVCC and an SECC may also need to be additionally performed. For example, separate authentication may be required for PLC connection and UWB connection.

Therefore, in the present disclosure, a level-2 communication technology proposed in ISO 15118-20 may be used. In ACDS or ACDU communication, WLAN may sufficiently perform required roles. UWB may perform an important role in localization, vehicle positioning, and pairing.

In an exemplary embodiment of the present disclosure, WLAN and UWB may be used together in a modified ISO 15118-20 and ISO 15118-8. In addition to UWB, a short-range communication technology such as BLE, RFID, or IrDA may be used.

WLAN may be suitable for complicated data communication such as TCP/IP/TLS/XML. UWB may be more advantageous than WLAN for pairing and positioning due to its ranging capability. Therefore, in an exemplary embodiment of the present disclosure, WLAN may be used as a main channel for most sessions except for a discovery operation and preparation operations for pairing and positioning. UWB may be used for vehicle positioning, and if needed, may be used also for pairing. UWB may additionally be used for operations such as docking, undocking, ACD-related error detection, or error handling. A short-range communication technology having characteristics similar to UWB may be used instead of UWB in other exemplary embodiments of the present disclosure, which may be understood by a person skilled in the art. Examples may include BLE, RFID, IrDA, or NFC.

For modifications such as the exemplary embodiments to be described later, ACDS or ACDU parameters related to a vendor specific element (VSE) and/or Additional Info. in ISO 15118-8 may be proposed to be modified. In ISO 15118-20, message parameters, message sequences, additional namespaces, and requirements may be changed or additionally proposed.

According to an exemplary embodiment of the present disclosure, an ACD charging communication method may be provided that defines a new namespace, changes message parameters, changes message sequences, and uses a docking-undocking-pairing mechanism.

According to an exemplary embodiment of the present disclosure, an ACD charging communication method may be provided that defines VSE additional-information parameters for ACDP, ACDU, or ACDS.

According to an exemplary embodiment of the present disclosure, an ACD charging communication method may be provided for an ACD that uses robotics, such as a manipulator or robot arm, as a docking-undocking mechanism.

According to an exemplary embodiment of the present disclosure, an ACD charging communication method may be provided such that communication between an EV or an EVCC and electric power supply equipment (EVSE) or an SECC, and a plurality of procedures for a charging process between a primary assembly and a secondary assembly, may be performed more effectively by using two or more different communication techniques.

Although various communication technologies may be used, strengths and weaknesses exist for each communication technology, and selective application of communication technologies suitable for respective procedures of an EV charging process is proposed in the present disclosure.

According to an exemplary embodiment of the present disclosure, a process in which an electric mobility and an electric vehicle supply equipment (EVSE) discover each other and share configuration information may be performed by using a first communication technology such as WLAN. An improved charging communication method and apparatus may be provided such that, after an electric mobility obtains information for position information and/or positioning by using a second communication technology specialized for short-range communication and is positioned at a chargeable position, preparation for charging and a charging process are performed again by using the first communication technology having various functions. Information for position information and/or positioning of the electric mobility may refer to a position of the electric mobility in a charging site, a relative position of the electric mobility with respect to an EVSE or an ACD charger, and/or a relative position of an inlet of the electric mobility with respect to an EVSE or an ACD charger.

In this process, message types and data formats may be proposed such that procedures for positioning between an electric mobility and a charging manipulator and procedures for preparation for electric power supply may be performed by considering various types of charging inlets of an electric mobility, various types of electric vehicle supply equipment, and various charging methods when electric power is supplied from an electric vehicle supply equipment (EVSE) to an electric mobility.

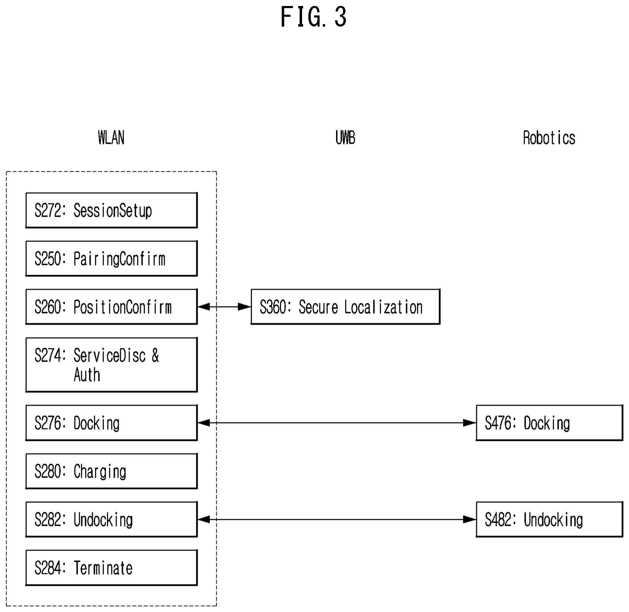

FIG. 2 and FIG. 3 are conceptual diagrams illustrating protocols of a charging communication and localization technology using a first communication technology such as WLAN and a second communication technology such as UWB communication, which may be applied to the architecture of FIG. 1 according to an exemplary embodiment of the present disclosure.

An exemplary embodiment illustrated in FIG. 2 and FIG. 3 provides an ACD charging communication method that uses docking-undocking means implemented by robotics, and discloses a communication method that is performed from the moment when an electric mobility enters a charging site and prepares for charging to the moment when charging starts and ends.

According to an exemplary embodiment of the present disclosure, positioning S330 may refer to a process in which an electric mobility moves to and parks at a sufficiently close position and/or position where a manipulator of an ACD charger may access an inlet of the electric mobility. A requirement may be that a position of the inlet of the electric mobility is located within a mating space of the ACD.

According to an alternative exemplary embodiment of the present disclosure, in order to support various types of ACD chargers, a requirement may be that a position of a power receiving device rather than a position of an inlet of the electric mobility is located within a mating space of an ACD charger.

There may be cases in which high-level communication such as WLAN communication is used to perform communication for charging of the electric mobility, and a second communication technology specialized for localization such as UWB is used to assist positioning S330 when necessary. Localization S320 and positioning S330 may be more effective when performed by using a short-range communication technology specialized for localization, and inefficiency may occur in a process in which an entire communication session is managed by WLAN communication.

In an exemplary embodiment of the present disclosure, localization S320 and positioning S330 may be performed independently of WLAN communication by utilizing advantages of a communication technology specialized for localization.

In an alternative exemplary embodiment of the present disclosure, secure localization S360 using a communication technology specialized for localization may be performed in association with WLAN-based position confirmation S260.

Localization S320 and positioning S330 using the second communication technology such as UWB may be performed between a discovery and configuration operation S210 by using the first communication technology such as WLAN and a connection and pairing operation S240 based on WLAN.

Configuration information and identification information of an EVSE and/or an ACD charger that are shared with an electric mobility during the discovery and configuration operation S210 may be used in localization S320 and positioning S330, and may also be used later in connection and pairing S240, thereby improving efficiency of an overall communication session.

Although FIG. 2 and FIG. 3 illustrate UWB communication for convenience of explanation, in other exemplary embodiments of the present disclosure, UWB may be replaced with or used together with another second communication technology to be described later. The second communication technology may be a low-level communication technology and may be required to be suitable for localization.

Although FIG. 2 and FIG. 3 illustrate WLAN communication for convenience of explanation, in other exemplary embodiments of the present disclosure, WLAN may be replaced with or used together with another first communication technology to be described later. The first communication technology may be required to be high-level communication technology.

According to an exemplary embodiment of the present disclosure, main communication for charging of an electric mobility may be performed through a Level-2 communication such as WLAN, and localization S320 may be performed by using a second communication technology such as UWB that is advantageous for short-range ranging and position determination. Positioning S330 may be performed by using localization results.

According to an exemplary embodiment of the present disclosure, connection and pairing S240 may be performed by using the first communication technology after positioning S330.

After connection and pairing S240, charging communication S270 based on a known standard such as ISO 15118-20 may be performed.

The second communication technology such as UWB may be used in localization S320, mobility positioning S330, or preparation operations for such procedures.

Configuration information collected by a first communication technology such as WLAN may be shared between an electric mobility and an EVSE or an ACD charger for subsequent operations.

A second communication technology may refer to UWB, RFID, NFC, or irDA. The second communication technology may be a low-level communication technology. The second communication technology may be a communication technology that has low communication cost and is implementable with simple hardware. The second communication technology may be a communication technology that performs predetermined tasks in predetermined environments. The predetermined tasks may include localization, a part of pairing, and/or assistance for positioning in an exemplary embodiment of the present disclosure.

The second communication technology may be advantageous for identifying a communication counterpart due to short reachable communication distance and ease of determining position and/or distance.

According to an alternative exemplary embodiment of the present disclosure, in a location operation S320 and a positioning operation S330 using the second communication technology, precise positioning may be assisted by using visual information from RFID, cameras installed in a charging station, CCTV, or other imaging means. Visual information of imaging means held by a mobility or a user may additionally be used.

Such processes may be achieved by supplementarily using vision information obtained from RFID, BLE, irDA, near-field communication, optical means, or imaging devices.

A WLAN client of an electric mobility may connect to an accurate WLAN server in order to guarantee accurate pairing.

Remaining charging communication operations S270 after pairing S240 may be performed by using the first communication technology such as WLAN.

The first communication technology may refer to a technology capable of Level-2 communication such as WLAN. The first communication technology may be capable of implementing higher-level applications than the second communication technology and may be capable of providing various applications and various functions.

The first communication technology may provide relatively rich information and functions via communication, may provide excellent security performance for identification, authentication/authorization, control, and billing, and may have excellent communication capability such as capacity and speed.

In the exemplary embodiments of FIG. 2 and FIG. 3, communication operations of an electric mobility may be performed by an EVCC of the electric mobility by controlling and managing a part or all of communication functions of a UWB communication module and a WLAN communication module of the electric mobility.

In the exemplary embodiments of FIG. 2 and FIG. 3, communication operations of an EVSE or an ACD charger may be performed by an SECC of the EVSE or the ACD charger by controlling and managing a part or all of communication functions of UWB anchors and WLAN APs associated with the EVSE or the ACD charger.

In the exemplary embodiments of FIG. 2 and FIG. 3, information exchanged between an electric mobility and an EVSE or an ACD charger by using UWB communication technology may be used also in communication operations using WLAN communication technology under control and management of an EVSE or an SECC. Likewise, information exchanged between an electric mobility and an EVSE or an ACD charger by using WLAN communication technology may be used also in communication operations using UWB communication technology under control and management of an EVSE or an SECC.

Referring again to FIG. 2 and FIG. 3, a discovery and configuration operation S210 may start when an electric mobility enters a charging spot or a charging site.

In the operation S210, an electric mobility may discover nearby ACD sites.

The electric mobility may receive configuration information through WLAN.

According to an exemplary embodiment of the present disclosure, the operation S210 may be defined and performed by an extension of vendor-specific elements (VSE) of the ISO 15118-8 standard.

According to an exemplary embodiment of the present disclosure, in the operation S210, an electric mobility may discover nearby ACD sites by using information such as a provider name and supporting charging types.

When the electric mobility supports ACD charging, the electric mobility may receive configuration information from nearby ACD sites.

According to an exemplary embodiment of the present disclosure, in the operation S210, WLAN APs associated with an EVSE or an ACD charger may broadcast discovery information and configuration information, and an electric mobility may discover nearby ACD sites by receiving the discovery information and configuration information.

An AP of an EVSE or an ACD charger may broadcast beacon messages, and the beacon messages may include a VSE field. The VSE field may include discovery information and configuration information. The messages, the VSE, and related information may refer to IEEE 802.11 and ISO 15118-8 standards. Some contents of the ISO 15118-8 standard may be added or extended for an exemplary embodiment of the present disclosure.

The discovery information may refer to contents defined in the ISO 15118-8 standard.

The configuration information may include information describing UWB anchors (for example, channels, identifiers, etc.) and ACD chargers (for example, identifier and mating space).

According to an alternative exemplary embodiment of the present disclosure, a layer-2 security mechanism may be applied in the operation S210. The layer-2 security mechanism may refer to, for example, the IEEE 802.1X standard or the ISO 15118-20 standard. When the layer-2 security mechanism is applied in the operation S210, pairing confirmation S250 or position confirmation S260 to be described later may be omitted.

Although an exemplary embodiment illustrates that EVSEs or ACD chargers periodically or non-periodically broadcast their identifiers, mating spaces, and information for localization such as information of anchors in the operation S210, in an alternative exemplary embodiment of the present disclosure, a mobility may broadcast a request message for discovery and configuration S210 when entering a charging spot, and in response thereto, EVSEs or ACD chargers may feedback necessary information.

According to an exemplary embodiment of the present disclosure, a localization operation S320 of an electric mobility and a positioning operation S330 of the electric mobility may be performed by using a second communication technology such as UWB. The operations S320 and S330 may be performed simultaneously or alternately.

In the operation S320, an electric mobility may calculate its own position at least twice until the positioning S330 is successfully performed.

The electric mobility may calculate its own position by using a time difference of arrival (TDOA) method. The TDOA method may refer to contents of the IEEE 802.15.4z standard. A position of an electric mobility calculated in the operation S320 may be calculated according to a coordinate system of a charging site.

In the operation S320, UWB anchors mounted on each EVSE or ACD charger may periodically broadcast blink messages. The blink messages may be broadcast sequentially by each UWB anchor according to a predefined inter-anchor interval. The UWB anchors may be time synchronized with each other.

A plurality of electric mobilities may enter a single charging station having a plurality of ACD chargers. Each electric mobility may measure time differences of blink messages and may solve hyperbola equations derived from measurement results to estimate a location of each electric mobility.

Parameters required for calculating a position of an electric mobility in an operation S320 may be obtained from configuration information or configuration data obtained in the above-described operation S210.

In the operation S320, an electric mobility may only receive messages. Therefore, a plurality of electric mobilities may calculate respective locations in a scalable manner without being confused with one another.

Although an exemplary embodiment illustrates that an electric mobility only receives messages in the operation S320, in an alternative exemplary embodiment of the present disclosure, a mobility may transmit a request message for localization, and EVSEs or ACD chargers may feedback parameters for localization in response. In this case, each of the plurality of electric mobilities may calculate its own location without confusion by using different time intervals, frequency bands, or channels.

In an operation S330, an electric mobility may position an inlet of the electric mobility within a mating space of an ACD selected by a driver of the electric mobility. For convenience of explanation, a target position in which an inlet of the electric mobility is to reach within the mating space of a selected ACD charger, namely within a reachable range of an ACD manipulator, may be referred to as a charging position.

In the operation S330, an electric mobility may maneuver based on a position calculated and estimated in the operation S320. The electric mobility may repeatedly or continuously perform positioning S330 until the electric mobility reaches the charging position, and the positioning S330 may be performed by manual operation of a driver or by autonomous driving.

The electric mobility may be positioned based on a position obtained in the operation S320 and site map information obtained in the operation S210 in the operation S330. The site map information obtained in the operation S210 may be included in the configuration information.

While an electric mobility moves within a charging site, a driver of the electric mobility or an autonomous driving system may determine an ACD charger to be used. For this purpose, the electric mobility may continuously monitor a distance to a closest mating space. A distance between an inlet of the electric mobility and the mating space may be monitored.

When an electric mobility determines which EVSE or ACD charger is to be used, for example, by a decision of a driver of the electric mobility, by reservation information, or by an autonomous driving system of the electric mobility, the electric mobility may approach a determined EVSE or ACD charger. In the positioning operation S330, the electric mobility may guide the driver, or the electric mobility may move to the charging position by an autonomous driving system or an automatic parking system. The charging position may refer to a target position of the positioning operation S330 in which an inlet of the electric mobility is located within a mating space of a closest ACD charger.

When an inlet of an electric mobility enters a mating space, the electric mobility may indicate to a driver or a parking system to stop a mobility system.

The operations S320 and S330 may continue to be performed until a driver or a parking system settles on an ACD charger.

In an operation S240, an electric mobility may be connected to a WLAN AP based on information collected in the operation S210. The WLAN AP may refer to a WLAN AP bound to an ACD charger at which the electric mobility is parked. During connection, the electric mobility and the AP may confirm pairing information with each other.

The electric mobility may search for an AP connected to an ACD charger by referring to configuration data exchanged in the operation S210 and may obtain a channel and a BSSID of the AP. The AP may be an AP connected to an EVSE or an ACD charger from which the electric mobility intends to receive power.

The electric mobility may transmit a communication association request message to the AP by using WLAN. The communication association request message may refer to the IEEE 802.11 standard. The communication association request message may include a VSE field including pairing information. The pairing information may include a randomly chosen pairing ID of the electric mobility, a location of the electric mobility, an ACD ID of an ACD to be connected, and an ACD mating space. The ACD ID and the ACD mating space may be obtained from configuration information obtained in the operation S210.

A pairing ID of the electric mobility may be randomly generated as a one-time use identity for a corresponding session.

The WLAN AP may verify whether pairing information received from the electric mobility is valid. When the pairing information is valid as a result of verification, the WLAN AP may accept connection with the electric mobility.

After the operation S240, charging communication may be performed with reference to the ISO 15118-20 standard in an operation S270.

The operation S270 may include a session setup S272, a pairing confirmation S250, a position confirmation S260, a ServiceDisc & Auth S274, a docking S276, a charging communication S280, an undocking S282, and a termination S284.

In an operation S250, an electric mobility and an EVSE or an ACD charger may verify, through a secure channel, whether configuration information used by the electric mobility as pairing information is correct.

When layer-2 security is not imposed in the operation S210, the operation S250 may be performed. The operation S250 may be performed through a secure channel established with reference to the ISO 15118-20 standard.

When an ISO 15118-20 TLS channel is established, an EVCC and an SECC may exchange Pairing Req/Res messages. Whether pairing information is correct may be confirmed based on the Pairing Req/Res messages.

After a successful WLAN association between an electric mobility and an AP (between an EVCC and an SECC), the electric mobility may perform an SDP (Service Discovery Protocol or SECC Discovery Protocol) protocol with reference to the ISO 15118-20 standard.

A TLS 1.3 handshake may be performed between the EVCC and the SECC, and based thereon, a secure channel may be established (ISO 15118-20 V2G).

When layer-2 security defined in the ISO 15118-20 standard such as WPA2 or WPA3 is not imposed in the operation S210, after a Session Setup Res message of the operation S272 is delivered from the SECC to the EVCC, in an operation S250, the EVCC may transmit a Pairing Req message to the SECC through the secure channel. A request message for the operation S250 may include a WLAN client MAC address of the electric mobility, a pairing ID of the electric mobility (an ID included in an association request message of the operation S240), and location coordinates of an inlet of the electric mobility (information transmitted in the operation S240).

The SECC may verify the Pairing Req message.

When pairing information is correct as a result of verification, the SECC may respond with a Pairing Res message to the EVCC through the secure channel. A response message of the operation S250 may include an ACD ID of the SECC, an ACD mating space, and a BSSID of an AP associated with the SECC.

The electric mobility or the EVCC may verify pairing information received from the SECC.

In an operation S260, an electric mobility and an EVSE or an ACD charger may verify a location of the electric mobility. The operation S260 may be performed by using both WLAN and UWB communication technologies (see a secure localization S360).

In the operation S260, bogus anchors that may affect localization accuracy may be excluded, and accurate localization may be performed by participation of only authenticated anchors. In the operation S260, secure location may be performed by using UWB blink messages broadcast from UWB anchors having authenticated codes through a WLAN secure channel and by using a secure TDOA method (see the operation S360).

The EVCC and the SECC may exchange fresh information on a secure channel. New information may be exchanged such that a temporal fingerprint for enabling an electric mobility to securely identify blink messages of anchors may be derived in terms of security.

SECC may transmit a temporal group key to an EVCC. The temporal group key may be generated by using a temporal message authentication code (MAC) such that the EVCC can check authenticity of blinks.

Anchors connected to an SECC may append a Bloom Filter Bit string and a message authentication code to respective blink messages.

An electric mobility or an EVCC may accept only blink messages including a Bloom Filter Bit string and a correct message authentication code that match the electric mobility.

The EVCC may transmit a Position Confirm Req message representing a randomly generated nonce.

The SECC may respond with a Position Confirm Res message. The Position Confirm Res message may represent a randomly generated nonce, a group ID, a channel number CH, a blink interval, a list of anchor IDs and coordinates of anchors, a group key, a Bloom Filter length, a Bloom Filter hash count, and a maximum number of on-bits of the Bloom Filter. The list of anchor IDs and the coordinates of anchors may be provided together with a transmission order in which anchors transmit blink messages.

The EVCC and the SECC may calculate Bloom Filter bits and changes in values for each blink. The SECC may transmit a Bloom Filter seed for an electric mobility to anchors of a group.

Each anchor may append a message authentication code to each blink and may append Bloom Filter bits for an electric mobility to Bloom Filter bits of each blink.

After an electric mobility receives a first Position Confirm Res message from the SECC, the electric mobility may begin to measure TDOA of blinks having a correct message authentication code. Each blink may be required to include a correct message authentication code and bits assigned to the electric mobility. Bits assigned to each electric mobility may have any value among values from 1 to a predetermined maximum bit.

The EVCC may repeat a Position Confirm Req/Res loop until a sufficient number of consecutive valid blink messages are collected for estimating a location of an electric mobility.

The EVCC may verify whether an inlet of an electric mobility is located within a mating space of an ACD charger based on a location of a mobility or an inlet derived by using secure TDOA. When a result of verification is satisfactory, an operation S274 may be performed. When an inlet of a mobility is not located within the mating space as a result of verification, a session may be stopped.

In an alternative exemplary embodiment of the present disclosure, to cope with various charging types of a mobility and an EVSE or an ACD charger, a location of a power receiving device instead of an inlet of a mobility may be verified as being within a mating space.

In a subsequent docking operation S276, a cable may be connected, and charging may begin thereafter.

Communication required for a subsequent charging process may be performed by using WLAN. High-bandwidth and reliable communication provided by WLAN together with escalated security features may be provided to a charging communication process.

A first communication technology such as WLAN may trigger another communication technology. For example, a communication technology with a robotics-based ACD may be triggered by the first communication technology S476 and S482. When a WLAN-based termination operation S284 is performed, a UWB-based communication may also be disconnected accordingly.

The operation S210 refers to an operation in which an electric mobility discovers a closest EVSE or ACD and establishes communication. A second communication technology such as UWB may allow an electric mobility to discover a closest EVSE or ACD at low cost because the second communication technology is optimized for a short range and for functions such as localization.

In the positioning operation S330, an electric mobility may be controlled to move to a dockable location or a mateable position and to adjust a position of the electric mobility, or necessary information may be guided to a driver.

A WLAN-based discovery and configuration operation S210 may include L2 setup and compatibility check by using ISO 15118-8. In a subsequent session setup S272, an SDP session for WLAN may include SECC discovery and compatibility filtering. The session setup S272 may include parameter negotiation. Although a WLAN is mainly used in the session setup S272, in an alternative exemplary embodiment of the present disclosure, a second communication technology such as UWB as well as a wired communication technology such as PLC may be used as auxiliary technologies to perform compatibility checks and parameter exchanges.

The positioning S330 may position a vehicle within a docking region by using results of a UWB-based location S320, and an ACD and/or an electric mobility may record corresponding results. Such recording may guarantee accurate positioning between an electric mobility and an EVSE or an ACD charger.

A docking session S276 may perform docking by robotics of an ACD by using WLAN S476, and the ACD may record corresponding results. An undocking session S282 may perform undocking by robotics of an ACD S482, and the ACD may record corresponding results. When ACD charging communication based on ISO 15118-20 is terminated S284, UWB and the like may also be disconnected before or together with termination of corresponding communication.

Although an exemplary embodiment illustrates that in the operation S210, a mobility first transmits a request message, in an alternative exemplary embodiment of the present disclosure, an EVSE or an ACD or a charger may periodically or nonperiodically broadcast its mating space and/or localization parameters, and a mobility may receive them and may select one of them such that the operation S210 is performed.

In the operation S220, localization and positioning may be performed together or alternately in sequence. A mobility may continuously measure its own location and a relative distance to an ACD. A location and a relative distance that change while the mobility moves by positioning may be updated. A mobility may move such that an inlet is located within a mating space.

Although FIG. 2 and FIG. 3 illustrate an exemplary embodiment based on ACD charging, an alternative exemplary embodiment of the present disclosure may be applied to other use cases.

An alternative exemplary embodiment of the present disclosure may be applied to conductive charging (including AC and/or DC) using WLAN. A case in which physical connection of a charging cable is performed without communication, for example, by a person, may be considered.

Existing mechanisms such as CCS and CHAdeMO may use wired communication technologies embedded in charging cables. Examples of such technologies include power line communication PLC used in CCS, and CAN or CANbus communication used in CHAdeMO.

In such an alternative exemplary embodiment, a part of a WLAN-based S270 operation may be replaced by a wired communication or a manual confirmation process.

As shown in FIG. 2, in an exemplary embodiment of the present disclosure, a communication method for charging an electric mobility performed by an electric vehicle communication controller EVCC of an electric mobility may include the following operations.

A charging communication method for charging an electric mobility according to an exemplary embodiment of the present disclosure may include an operation in which an EVCC discovers a first electric vehicle supply equipment EVSE within a range by using a first communication technology S210, an operation in which the EVCC obtains information for positioning the electric mobility to a charging position to receive power from the first EVSE by using a second communication technology S320, and an operation in which, after the electric mobility is positioned to the charging position S330, the EVCC performs communication connection and pairing with a supply equipment communication controller SECC of the first EVSE by using the first communication technology S240.

An operation S210 in which an EVCC discovers a first EVSE by using a first communication technology may include receiving, from a plurality of access points APs respectively associated with a plurality of EVSEs and using the first communication technology, beacon messages including VSE vendor specific elements fields including discovery information and configuration information, and determining one of the plurality of EVSEs as the first EVSE.

In this case, an EVSE corresponding to a closest ACD charger among the plurality of EVSEs may be determined as the first EVSE.

In a charging communication method for charging an electric mobility performed by an EVCC according to an exemplary embodiment of the present disclosure, configuration information may include information describing a plurality of anchors respectively associated with each of a plurality of access points and each of a plurality of EVSEs and using a second communication technology, and information describing chargers of an ACD Autoconnect or Automatic Charging Device associated with each of the plurality of EVSEs.

Information describing the plurality of anchors may include channels or identifiers of the plurality of anchors, and information describing chargers of the ACD may include identifiers of chargers of the ACD or mating spaces.

An operation S320 in which an EVCC obtains information for positioning an electric mobility to a charging position by using a second communication technology may include receiving blink messages broadcast from a plurality of anchors using the second communication technology and time synchronized, and measuring a position of the electric mobility by a TDOA method using time differences among the blink messages.

The operation S320 in which the EVCC obtains information for positioning the electric mobility to the charging position by using the second communication technology may be performed at least twice to calculate the position of the electric mobility while the electric mobility is being positioned to the charging position S330. The electric mobility may be positioned to the charging position based on a calculation result of the position of the electric mobility. That is, a positioning operation S330 of the electric mobility may be performed by using the calculation result of the position of the electric mobility.

A charging position may refer to a target position of an electric mobility that satisfies a condition that an inlet of the electric mobility is located within a mating space of an ACD of the first EVSE.

In the operation S210 in which the EVCC discovers the first EVSE, the EVCC may obtain configuration information including whether the first EVSE supports an ACD function, whether the first EVSE supports the second communication technology, and an identifier of an anchor or an ACD charger associated with the first EVSE.

In this case, one or more of the operation S320 in which information for positioning the electric mobility to the charging position is obtained and the operation S240 in which the EVCC performs communication connection or pairing may be performed by the EVCC based on the configuration information.

An operation S240 in which the EVCC performs communication connection and pairing with an SECC of the first EVSE by using the first communication technology may include obtaining pairing information of the first EVSE based on configuration information of the first EVSE, the pairing information including a randomly selected pairing identifier of the electric mobility, a position of the electric mobility, an ACD identifier of a first ACD associated with the first EVSE, or a mating space of the first ACD, and transmitting a communication association request message including the pairing information of the first EVSE to the SECC of the first EVSE.

A charging communication method for charging an electric mobility performed by an EVCC according to an exemplary embodiment of the present disclosure may further include, after communication connection and pairing between the EVCC and the SECC are performed S240, a pairing confirmation operation S250 between the EVCC and the SECC.

In this case, the operation S250 may include establishing a secure channel, transmitting, through the secure channel, a pairing request message including a WLAN client MAC address of an electric mobility, a pairing identifier of the electric mobility, or location coordinates of an inlet of the electric mobility to the SECC, receiving, through the secure channel, a pairing response message including an ACD identifier of the SECC, an ACD mating space, or a BSSID of an AP associated with the SECC from the SECC, and verifying, by the electric mobility, pairing information in the pairing response message.

A charging communication method for charging an electric mobility performed by an EVCC according to an exemplary embodiment of the present disclosure may further include, after communication connection and pairing between the EVCC and the SECC are performed S240, a position confirmation operation S260 between the EVCC and the SECC.

In this case, the operation S260 may include establishing a secure channel, exchanging, between the EVCC and the SECC through the secure channel, temporary security information or encoded security information capable of checking authenticity of blink messages broadcast from a plurality of anchors using the second communication technology, identifying, by the EVCC, blink messages based on the temporary security information or the encoded security information, measuring a position of the electric mobility based on time synchronization information of the plurality of anchors from the identified blink messages S360, and verifying, by the EVCC, whether the position of the electric mobility is within a mating space of an ACD of the first EVSE.

Encoded security information may include a checker code, and the checker code may include, for example, a Bloom Filter bit string.

In a charging communication method for charging an electric mobility performed by an EVCC according to an exemplary embodiment of the present disclosure, a first communication technology may be a WLAN Wireless LAN technology, and a second communication technology may be one of UWB, RFID, NFC, or IrDA.

Referring again to FIG. 2, in an exemplary embodiment of the present disclosure, a charging communication method for charging an electric mobility performed by an SECC of an electric vehicle supply equipment associated with a primary assembly transmitting power to the electric mobility may include the following operations.

In a charging communication method for charging an electric mobility according to an exemplary embodiment of the present disclosure, an operation S210 may include broadcasting, through an access point AP using a first communication technology, beacon messages including VSE vendor specific elements fields including discovery information and configuration information, an operation S320 may include broadcasting, through an anchor using a second communication technology, blink messages having a predetermined inter-anchor interval based on synchronized time information, and an operation S240 may include, after an electric mobility is positioned to a charging position to receive power from a primary assembly S330, performing communication connection and pairing with the electric mobility by using the first communication technology.

In a charging communication method for charging an electric mobility performed by an SECC according to an exemplary embodiment of the present disclosure, configuration information may include information describing an anchor associated with an access point and a primary assembly and using a second communication technology, and information describing a charger of an ACD Autoconnect or Automatic Charging Device associated with the primary assembly.

Information describing the anchor may include a channel or an identifier of the anchor, and information describing the charger of the ACD may include an identifier of the charger of the ACD or a mating space.

In a charging communication method for charging an electric mobility performed by an SECC according to an exemplary embodiment of the present disclosure, a charging position may refer to a target position of an electric mobility that satisfies a condition that an inlet of the electric mobility is located within a mating space of an ACD of a primary assembly.

In a charging communication method for charging an electric mobility performed by an SECC according to an exemplary embodiment of the present disclosure, configuration information may include whether a primary assembly supports an ACD function, whether the SECC supports a second communication technology, and an identifier of an anchor or an ACD charger. An operation in which communication connection and pairing are performed with an electric mobility by using the first communication technology may be performed based on the configuration information.

A charging communication method for charging an electric mobility performed by an SECC according to an exemplary embodiment of the present disclosure may further include, after communication connection and pairing between an electric mobility and the SECC are performed S240, a pairing confirmation operation S250 between the electric mobility and the SECC.

In this case, the operation S250 may further include establishing a secure channel, receiving, from the electric mobility, a pairing request message including a WLAN client MAC address of the electric mobility, a pairing identifier of the electric mobility, or location coordinates of an inlet of the electric mobility through the secure channel, and transmitting, through the secure channel, a pairing response message including an ACD identifier of the SECC, an ACD mating space, or a BSSID of an AP associated with the SECC to the electric mobility.

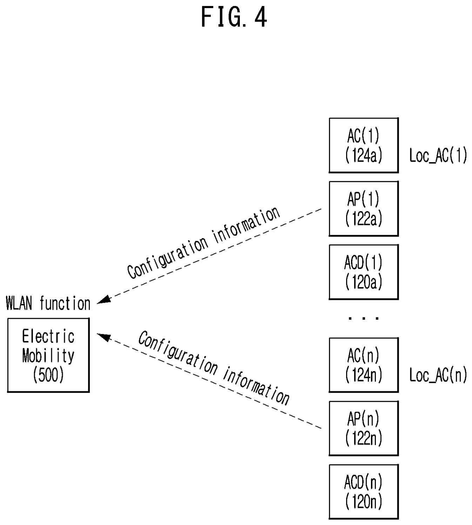

FIG. 4 is a conceptual diagram illustrating entities participating in a discovery and configuration process for charging communication according to an exemplary embodiment of the present disclosure and operations of the entities.

As shown in FIG. 4, ACD(i) (i = 1 to n), each corresponding to each of n EVSEs in a charging station, AP(i) (i = 1 to n) dedicated to each ACD(i), and anchor AC(i) (i = 1 to n) dedicated to each ACD(i) are illustrated.

For example, AP(1) 122a and anchor AC(1) 124a may be assigned to ACD(i) 120a, and AP(n) 122n and anchor AC(n) 124n may be assigned to ACD(n) 120n.

For convenience of description, an electric mobility 500 is assumed to enter a charging station and the operation S210 of FIGS. 2 and 3 is assumed to begin.

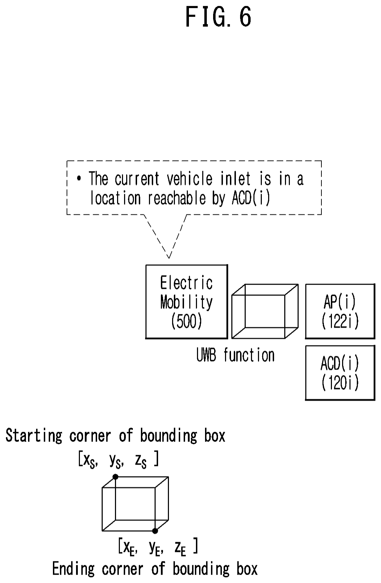

In the present specification, an ACD charging site is assumed to include a plurality (n in FIG. 4) of ACD chargers. Each ACD charger ACD(i) may include a UWB anchor AC(i) and a WLAN AP AP(i). Each ACD charger ACD(i) may be assigned one ACD-ID and a mating space. The mating space may be given as a three-dimensional cuboid and may be represented by a starting corner and an ending corner as illustrated in FIG. 6 described later.

ACD chargers ACD(i) may be arranged such that UWB anchors and APs of the ACD chargers ACD(i) cover an entire charging site.

For convenience of description, an ACD ID of an i-th ACD may be denoted as ACD(i), a mating space may be denoted as MS(i), an AP MAC address may be denoted as AP(i), and a UWB anchor may be denoted as AC(i).

A PID of an electric mobility 500 may be denoted as EVPID, and n APs and n anchors may be arranged for n ACDs.

APs may be deployed to cover a charging site region with a minimum number of APs. Positions of the APs may be arranged independently of positions of the ACDs. However, positions of the APs may be adjusted such that the APs effectively cover positions of the ACDs. In an alternative exemplary embodiment, a number of APs may be equal to or greater than a number of ACDs. In some cases, two or more APs may be associated with one ACD.

To allow an electric mobility 500 or an EVCC to connect to an SECC, the electric mobility 500 may be required to connect to an AP corresponding to an ACD.

UWB anchors may be deployed separately from ACD chargers. Anchors may be deployed to maximize localization performance. Each anchor may be assigned an ID AC(i) and location information Loc_AC(i).

In the operation S210 of FIG. 2, WLAN-AP(i) may broadcast configuration information by using WLAN. WLAN-AP(i) may broadcast configuration information according to a predetermined rule or may broadcast configuration information in response to a request message being broadcast by an electric mobility 500.

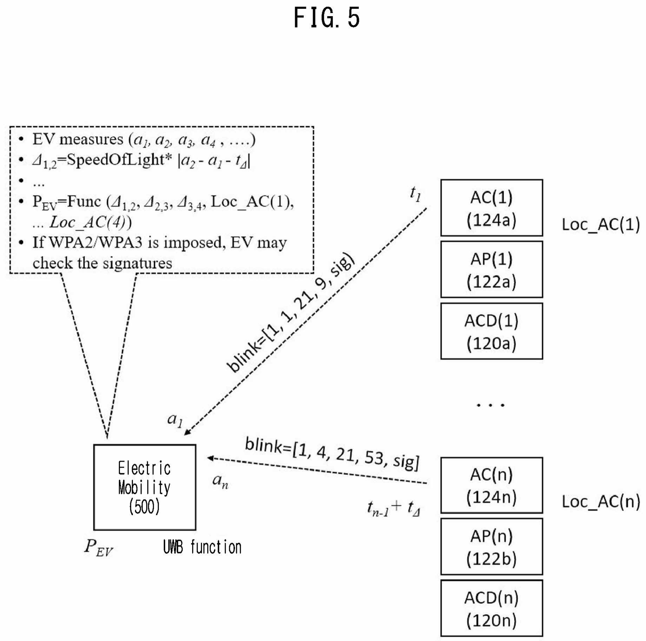

FIG. 5 is a conceptual diagram illustrating entities participating in a localization process according to an exemplary embodiment of the present disclosure and operations of the entities.

As shown in FIG. 5, n anchors (124a, 124n) may periodically broadcast blink messages through a predetermined channel C at predetermined timings. Each consecutive transmission may be spaced apart by a time interval t△. The time interval may be referred to as a blink interval.

One blink message may include the following fields:

> Group ID: 1-byte integer
> Anchor ID: 1-byte integer
> Round ID: 4-byte integer
> Nonce: 2-byte bit string
> Sig: message signature (64 bytes)

Each blink message may refer to an SP3 packet format defined in the IEEE 802.15.4z standard. A message signature may be generated by ECDSA using a secp256r1 curve based on a bit string (8 bytes in total) including fields from a group ID to a nonce.

n APs 122a and 122n may periodically broadcast beacon messages. Beacon messages defined in the IEEE 802.11 standard may be broadcast, for example, at intervals of 100 ms. As described above, beacon messages may include configuration information.

Each broadcast message may include at least one VSE vendor specific element. The VSE may include at least one of the following types of content according to a transmitting entity of each message and a purpose of each message.

Table 1 illustrates an exemplary embodiment of information of an SECC constructed by referring to the ISO 15118-8 standard.

[Table 1]

| Contents | Value | Length |
|---|---|---|
| Elements ID | OxDD | 1 |
| Length | <len> | 1 |
| Org ID | <IEC> | 5 |
| Type | 0x03 | 1 |
| ETT | <ett> | 1 |
| Country | <country> | 2 |
| Operator ID | <OP ID> | 3 |
| Site ID | <site> | 5 |

Table 2 illustrates an exemplary embodiment of ACD information and anchor information that may be included in a message.

[Table 2]

| Contents | Value | Length |
|---|---|---|
| ACD Count | N | 1 |
| ACD ID | <id> | 2 |
| Mating Space | <x, y, z>, <x, y, z> | 24 |
| Reserved | | 26x(N-1) |
| Group Number | <G> | 1 |
| Blink Channel | <ch> | 1 |
| Blink Interval | t△ | 4 |
| Anch Count | M | 1 |
| Anch ID | <id> | 2 |
| Anch Loc. | <x, y, z> | 12 |
| Reserved | | 14x(M-1) |

Referring to Table 2, the ACD information may include the following items:

the number of ACDs (basic setting = "1");
a list of (ACD-ID and mating space) / an ACD that is bound to a specific AP;
the ACD ID may be a 2-byte integer;
the mating space may be represented by the coordinates of two corners of a cuboid (24 bytes, assuming each coordinate is 4 bytes).

The in-range anchor information may include the following items:

an anchor group ID;
a blink channel;
a blink interval t△ (in microseconds);
the number of (reachable) anchors;
a list of anchor IDs and 3-dimensional coordinates of the anchors (x, y, z of $4\times3$ bytes).

These items may be included in the blink message and transmitted in the same order as illustrated in Table 2.

Table 3 shows an exemplary embodiment of additional information describing the ACD.

[Table 3]

| ETT | Parameter | Value | Description |
|-----|-----------|-------|-------------|
| ACD | T (ACD Type) | P | ACDP |
|     |            | U | ACDU |
|     |            | S | ACDS |
|     | E (Energy Type) | AC | AC charging |
|     |            | DC | DC charging |
|     | C (Case) | D | Case D |
|     |            | E | Case E |
|     | V (Vehicle Positioning) | U | UWB |
|     |            | O | Optical |
|     |            | M | Manual (Autonomous Parking) |
|     | P (Pairing) | U | UWB |
|     |            | O | Optical |
|     |            | R | RFID |
|     |            | M | Manual (Autonomous Parking) |
|     | I (Inlet cover handling) | E | by EV |
|     |            | A | by ACD manipulator |

Referring to Table 3, additional information for the case where the ETT (Energy Transfer Type) is defined as an ACD is illustrated. When the electric mobility 500 enters the ACD charging site, the electric mobility 500 may scan WLAN channels to detect beacon messages that include the VSE fields specified above.

When multiple sites are detected, the site with a higher RSSI may be selected, or a manual selection may be made.

The electric mobility 500 may collect anchor information and configure at least one UWB receiver.

A single UWB receiver may be sufficient for localization.

More than one UWB receiver may be used to determine the orientation of the mobility 500.

The electric mobility 500 may collect ACD information.

The byte lengths assigned to each field shown in Tables 1 through 3 assume that the total size of the VSE is 256 bytes. When 256 bytes is insufficient, an additional VSE may be defined to include extra information.

As an exemplary method for saving VSE space, when one ACD is dedicated to one AP and one anchor, the VSE may focus mainly on ACD information, and duplicated information among AP information and anchor information may be omitted or merged/split into separate fields.

When layer-2 security (WPA2/WPA3) is imposed in operation S210, the anchor's public key may be included in the VSE such that secure TDOA may be performed. (In this case, operation S260 may be omitted.)

After the electric mobility 500 discovers the charging site and receives the configuration information, the mobility 500 may begin repeatedly performing the localization procedure (S320). The mobility 500 may continue performing the localization procedure (S320) while moving within the charging site.

The mobility 500 may calculate its own location using TDOA (Time Difference Of Arrival) (S320). The calculated location may be the location coordinate of the inlet of the mobility 500. TDOA may refer to the method defined in IEEE 15.4z.

The mobility 500 may receive blink messages from anchors that share the same group number and round number. The group number and round number may be identified in operation S210. The set of such k messages mi may be denoted as $(m_1, m_2, ..., m_k)$.

When one or more blinks are missing, the mobility 500 may adjust the inter-anchor interval. For example, when one anchor between two anchors is missing, the inter-anchor interval between the two anchors may be regarded as $2t_\Delta$.

The mobility 500 may record the arrival times $a_i$ of the blink messages. When the arrival times of the set $(m_1,$

$m_2$, ..., $m_k$) are recorded, they may be denoted as ($a_1$, $a_2$, ..., $a_k$).

For each pair of consecutive anchors, the mobility-to-anchor distance difference $\Delta_{i,i+1}$ may be calculated as: $\Delta_{i,i+1}$ = SpeedOfLight $\times$ |ai+1 - ai - t$\Delta$|.

Using the given distance differences ($\Delta_{1,2}$, $\Delta_{2,3}$, ..., $\Delta_{k-1,k}$) and the anchor locations ([$x_1$, $y_1$, $z_1$], ..., [$x_k$, $y_k$, $z_k$]), the mobility 500 may compute an estimated location. The location estimation of the mobility 500 may be obtained by solving for the intersection point of k-1 hyperbola curves. These k-1 hyperbola curves may be derived from each pair of consecutive anchors based on the distance differences given by Equation 1 below.

[Mathematical Expression 1]

$$| \, \mathrm{Distance}(P_{EV}, P_{AC(i)}) - \mathrm{Distance}(P_{EV}, P_{AC(j)}) \, | = \Delta_{i,j}$$

Here, $\Delta_{i,j}$ denotes a distance difference between the i-th anchor and the j-th anchor. $P_{EV}$ may refer to a position of the mobility 500, and $P_{AC(i)}$ and $P_{AC(j)}$ may refer to positions of the i-th anchor and the j-th anchor, respectively.

The mobility 500 may continuously update its own position until the positioning operation S330 is successfully completed.

A method for compensating estimation or measurement errors of the localization result may additionally be considered.

FIG. 6 illustrates, according to an exemplary embodiment of the present disclosure, entities participating in a positioning operation after localization, together with their operations and resulting states.

Based on an estimated position of the mobility 500 obtained in operation S320 and mating-space information obtained in operation S210, the mobility 500 may continuously identify a closest ACD. As the driver of the mobility 500 or the mobility 500 itself approaches a specific ACD (for example, based on the driver's decision, reservation information, or an ACD-selection algorithm using the positions of the mobility 500 and the ACD), the mobility 500 may monitor whether the inlet of the mobility 500 enters the mating space of the ACD.

During the positioning operation S330, the mobility 500 may interact with the driver or an autonomous parking system such that the mobility 500 moves toward the mating space. When the inlet sufficiently enters the mating space, the mobility 500 may notify the driver or the parking system to stop movement.

In the positioning operation S330, an approaching direction of the ACD manipulator (that is, a direction from which the ACD manipulator accesses the inlet within the mating space) may also be taken into account such that the inlet is placed at a position reachable by the ACD manipulator.

After the successful positioning operation S330, the mobility 500 may be controlled not to move. In an alternative exemplary embodiment of the present disclosure, a specific algorithm for approaching the mating space may additionally be considered.

The mating space may be represented as a bounding box defined by x, y, and z coordinates of a starting corner and x, y, and z coordinates of an ending corner, as illustrated in FIG. 6.

When the positioning operation S330 positions the mobility 500 accurately within a region reachable by the ACD manipulator, the mobility 500 may connect to an AP corresponding to the ACD, according to the ACD information included in the VSEs of the APs, in operation S240. For example, when the mobility 500 is positioned in front of ACD(2), the mobility 500 may perform a WLAN association procedure with AP(2) corresponding to ACD(2) by referring to the IEEE 802.11 standard.

During the association, the mobility 500 may include its pairing identity (EV-PID) and its position together with the information of the selected ACD in a VSE field of the association request message, and may transmit the association request message to the AP.

Table 4 illustrates, according to an exemplary embodiment of the present disclosure and by referring to ISO 15118-8, an example of items included in the VSE field of an association request message in operation S240 after the positioning operation S330.

[Table 4]

| Contents | Value | Length |
|---|---|---|
| Elements ID | OxDD | 1 |
| Length | <len> | 1 |
| Org ID | <IEC> | 5 |
| Type | 0x04 | 1 |
| ETT | <ett> | 1 |

(continued)

| Contents | Value | Length |
|---|---|---|
| EV-PID | <ev-pid> | 4 |
| EV Coord | (x, y, z) | 12 |
| Anch Group | <G> | 1 |
| ACD ID | <id> | 2 |
| Mating space | $<X_S, Y_S, Z_S>, <X_E, Y_E, Z_E>$ | 24 |
| Add info | | * |

The VSE format of Table 4 may be an extended version of the VSE format referring to the ISO 15118-8 standard. Since the association request message illustrated in Table 4 is transmitted from the ACD-EV side, a new entity type 0x04 indicating that the transmitting entity is the ACD-EV may be added. The EV-PID in Table 4 may be a randomly generated pseudonym that is consistently used for the corresponding session.

The EV Coord in Table 4 may refer to an estimated position of the inlet of the mobility 500.

The Anch Group in Table 4 may refer to an anchor-group ID used for localizing the mobility 500.

The ACD-ID in Table 4 may refer to an identity of the ACD at which the mobility 500 is recognized to be located.

The mating space in Table 4 may refer to the mating space of the ACD at which the mobility 500 is recognized to be located.

An AP that receives an association request message from the mobility 500 may verify pairing information contained in the VSE of the message. The verification procedure may include the following items.

The AP may verify whether the ACD-ID is correct based on the position of the mobility 500.

The AP may verify whether the mating-space field corresponding to the ACD-ID is correct.

The AP may verify whether the inlet of the mobility 500 is located within the volume of the mating space.

The AP may verify whether the EV-PID is unique for the current site at the current time.

When the verification of the AP is successful, the AP may accept a connection with the mobility 500. When the verification fails, the AP may reject the connection with the mobility 500.

When the connection is successful, the mobility 500 may continue a higher-layer connection by referring to the ISO 15118-20 standard.

For example, the mobility 500 may perform an SDP protocol such that an accurate SECC is determined based on the pairing information obtained through the above procedure. After the mobility 500 receives connection information from the SECC, the mobility 500 may establish a TLS 1.3 handshake with the SECC and may establish a secure channel. Thereafter, the mobility 500 may perform V2G charging communication (S270).

As described above, the pairing information of the mobility 500 is verified using knowledge of the infrastructure during the WLAN association of operation S240. However, when layer-2 security (WPA2/WPA3) is not used, a VSE may still not be protected with integrity. Once a secure communication channel is established based on identities of the mobility 500 and the ACD charger, such information may be required to be verified.

The EVCC and the SECC may verify that an external attacker has not tampered with the information by exchanging the pairing information again through the secure channel (S250).

As shown in FIGS. 3 and 6, after the EVCC receives a Session Setup Res message from the SECC (S272), the EVCC may transmit an ACD_Pairing Req message to the SECC. The ACD_Pairing Req message may include the following items:

EV-PID, which is a pairing ID of the EVCC
An inlet location of the mobility equipped with the EVCC (EV_Location of Table 5)

Table 5 illustrates an example of a hierarchical structure of an ACD_Pairing Req message including pairing information, configured in a form similar to the ISO 15118-20 standard.

[Table 5]

| Element Name | Element Name | Element Name | Type / Description |
|---|---|---|---|
| ACD_Pairing Req Type | Header | | v2gci_ct: V2G Request Type (extension) |
| | EVPID | | |

(continued)

| Element Name | Element Name | Element Name | Type / Description |
|---|---|---|---|
| | EV_Location | Coord X | ACD_Coordinate |
| | | Coord Y | XYZ_Type |
| | | Coord Z | |

Upon receiving the ACD_Pairing Req message, the SECC may verify the ACD_Pairing Req message by using the mating space of the ACD and the AP association log. When the pairing information provided from the mobility is correct, the SECC may return an ACD_Pairing Res message to the EVCC. The ACD _Pairing Res message may include the following items:

ACD ID
ACD mating space
Alternative ACD Info

Table 6 illustrates an example of a hierarchical structure of an ACD_Pairing Res message including pairing information, configured in a form similar to the ISO 15118-20 standard.

[Table 6]

| Elements Name | Elements Name | Elements Name | Type / Description |
|---|---|---|---|
| ACD_Pairing Res Type | Header | | v2gci_ct: |
| | Resoonse Code | | V2G Request Type (extension) |
| | ACD ID | | |
| | ACD Mating Space | Corner Start | ACD_Mating Space Type |
| | | Corner End | |
| | Alternative ACD Info | APSSID | Alternative ACD Type |
| | | APBSSID | |
| | | SECCIP Address | |
| | | SECC Port | |
| | | ACD ID | |
| | | ACD Mating Space | |

Table 7 specifically illustrates a lower-level message structure of the ACD_Mating_Space item of Table 6.

[Table 7]

| Element Name | Element Name | Element Name | Type / Description |
|---|---|---|---|
| ACD_Mating Space | Corner Start | | ACD_Mating Space Type |
| | | Coord X | ACD_Coordinate |
| | | Coord Y | XYZ_Type |
| | | Coord Z | |

(continued)

| Element Name | Element Name | Element Name | Type / Description |
|---|---|---|---|
| | Corner End | | ACD_Mating Space Type |
| | | Coord X | ACD_Coordinate XYZ_Type |
| | | Coord Y | |
| | | Coord Z | |

The mobility or the EVCC may verify the pairing information received from the SECC. When the pairing verification fails, an optional element transmitted by the SECC may be proposed as the Alternative ACD Info of Table 6.

When the pairing verification fails and the SECC has information for enabling the mobility to perform correct pairing, the SECC may provide the correct pairing information to the mobility as the Alternative ACD Info of Table 6.

In an alternative exemplary embodiment of the present disclosure, the ACD ID and the ACD Mating Space items of Table 6 may be included and transmitted in the ACD_Pairing Req message. In the alternative exemplary embodiment, when a pairing request is transmitted, the EVCC may include and transmit information on the ACD side known to the EVCC inside the request message.

The security of TDOA depends on the integrity and arrival time of blink messages. When an attacker attempts to manipulate a localization result, the attacker may inject bogus blink messages to cause confusion. A bogus blink message may include anchor information arbitrarily selected by the attacker or may be generated based on an unrealistic arrival time. Such bogus blink messages may induce an inaccurate estimation of the mobility's location.

## Adversary Model

According to an exemplary embodiment of the present disclosure, the position confirmation (S260) procedure is proposed to counter blink-replay attacks and blink-forgery attacks.

For example, in a blink-replay attack, an attacker records a blink message and retransmits the blink message at a specific timing so that the mobility may believe that the message has been transmitted from an authorized anchor. In addition, in a blink-forgery attack, an attacker injects a blink message that is elaborately generated to appear as a genuine blink, thereby degrading localization accuracy.

According to an exemplary embodiment of the present disclosure, the position confirmation (S260) procedure can protect the integrity and authenticity of blink messages using digital signatures including freshness components, against blink-replay attacks and blink-forgery attacks.

After the pairing confirmation (S250), the mobility may optionally perform the secure-localization procedure (S260). This procedure may be referred to as secure-TDOA.

The mobility can transmit an empty PositionConfirmReq message in which resultCode is set to "PENDING."

The SECC may respond to the PositionConfirmReq message by returning a PositionConfirmRes message. The PositionConfirmRes message of the SECC may include the following items:

Anchor Group ID
Channel Number
Blink time interval
List of anchors, their locations, and their public keys
Set responseCode to "EVSEProcessing"

After receiving the first PositionConfirmRes message from the SECC, the EVCC may start receiving blink messages from anchors of the corresponding group.

The EVCC may verify the digital signature of each blink message and thereby check the integrity and authenticity of each blink message.

A blink message whose digital signature verification fails may be discarded.

Once the validity check is completed, the mobility may compute location estimation.

The mobility may perform the secure-TDOA for at least ten rounds of blink messages and may obtain a localization result.

Until the secure-TDOA is finished, the EVCC and the SECC may exchange PositionConfirmReq/Res messages in which resultCode is "PENDING" and responseCode is "EVSEProcessing."

When the estimated location obtained through the secure-TDOA matches the estimated location previously obtained by the normal TDOA within a predefined range (including the case where both locations fall within the same mating space), the EVCC may transmit a PositionConfirmReq message to the SECC in which resultCode is set to "SUCCESS." The SECC may respond by transmitting a PositionConfirmRes message to the EVCC in which response-Code is set to "Finished."

When the two estimated locations do not match (including the case where the two locations do not belong to the same mating space), the EVCC may transmit a PositionConfirmReq message to the SECC in which resultCode is set to "FAILED." The SECC may then respond by transmitting a PositionConfirmRes message in which responseCode is set to "FAILED_SECURE_TDOA."

Through this method, the mobility may perform localization securely so that an attacker may not predict the signature of blink messages. The security of the secure-TDOA may rely on the secure channel established by TLS 1.3. TLS 1.3 can guarantee the correctness of the public keys of anchors. The secure-TDOA may provide an extra layer of security to prevent safety-critical incidents or potential denial-of-service attacks arising from misinterpretation of the mobility's location caused by blink-replay or blink-forgery attacks.

**Digital Signature Scheme**

A digital signature scheme should be selected considering the signature size and key size for non-repudiation purposes. A key-size guideline may refer to "NIST Special Publication 800-57 Part 3 Revision 1." According to an exemplary embodiment of the present disclosure, ECDSA using the secp256r1 curve with a key size of 256 bits for a security level of 128 bits similar to the security strength selected in the ISO 15118-2 standard may be recommended. This approach may result in a signature size of 64 bytes (twice the 256-bit public key). When higher security is desired, another exemplary embodiment of the present disclosure may select escp512r1, having a 512-bit key and a signature size twice as large, to achieve a security level of 256 bits.

Once a WLAN link is established between the mobility and the access point, the mobility may establish the link layer and network layer according to Sections 7.4, 7.5, and 7.6 of ISO 15118-20 (2022). The mobility may then perform the SDP Procedure according to Section 7.10.1 of the ISO standard. In particular, the SDP request message and SDP response message may use updated definitions of the P2PS/PPD field of Table 24 of ISO-20. The updated definitions for the SDP request and SDP response messages may be represented through Table 8 and Table 9.

[Table 8]

| Byte No. | 3 | | | | | | | |
|---|---|---|---|---|---|---|---|---|
| Bit | 7 | 6 | 5 | 4 | 3 | 2 | 1 | 0 |
| PPD on Infrastructure | | | | | | | | X |
| PPD on EV | | | | | | | X | |
| WPT_LF on Infrastructure | | | | | | X | | |
| WPT_LF on EV | | | | | X | | | |
| WPT_Cam on EV | | | | X | | | | |
| ACD_U_Infrared | | | X | | | | | |
| ACD_directed_WLAN | | X | | | | | | |
| ACD_PPD_UWB | X | | | | | | | |

[Table 9]

| Byte No. | 4 | | | | | | | |
|---|---|---|---|---|---|---|---|---|
| Bit | 7 | 6 | 5 | 4 | 3 | 2 | 1 | 0 |
| PPD on Infrastructure | | | | | | | | |
| PPD on EV | | | | | | | | |
| WPT_LF on Infrastructure | | | | | | | | |
| WPT_LF on EV | | | | | | | | |
| WPT_Cam on EV | | | | | | | | |

(continued)

| | | | | | | | | |
|---|---|---|---|---|---|---|---|---|
| ACD_U_Infrared | | | | | | | | |
| ACD_directed_WLAN | | | | | | | | |
| ACD_PPD_UWB | | | | | | | | |

According to Table 23 of ISO20, 0x20 for the ACD-U case D, 0x21 for the ACD-U case E, and 0x30 for the ACD-S may be used in the coupling type field of the SDP request message and the SDP response message. Unless otherwise instructed in subsequent sections, the application protocol defined in ISO 15118-20 (2022) may be followed. After the SDP procedure is finished, the mobility may establish a TCP/TLS connection with the SECC by using the connection information received in the SDP response message. This procedure may comply with Section 7.7.3 for TLS and Section 7.7.1 for TCP of ISO20.

Messages for the ACDU and the ACDS may use the following payload types of the V2GTP header (Table 10).

[Table 10]

| 0x8007 | Part20ACDUMainstreamPayloadID | ACDU |
|---|---|---|
| 0x8008 | Part20ACDSMainstreamPayloadID | ACDS |

In the protocol negotiation by the SupportedAppProtocol message, the following new protocol namespaces may be used. urn:iso:std:iso:15118:-20:ACDS-AC

urn:iso:std:iso:15118:-20:ACDS-DC
urn:iso:std:iso:15118:-20:ACDU-AC
urn:iso:std:iso:15118:-20:ACDU-DC

Appropriate namespaces may be used to indicate charging methods supported by the mobility and the ACD charger.

For ACD charging, the VersionNumberMajor of "1" may be used.

In the session setup S272, in the SessionSetupReq message, the EVCC may transmit the EVCCID to the SECC. In response, the SECC may transmit the EVSEID to the EVSE in the SessionSetupRes message. The EVCC and the SECC may confirm whether each of the EVCCID and the EVSEID matches the EVID and the ACDID received through the UWB link.

In the ServiceDiscoveryRes message, the SECC may indicate charging services that the SECC may provide. For the ACD service, updated items of ISO20 may be used. These items may be shown in Table 11 below.

[Table 11]

| ServiceID | ServiceName | Description |
|---|---|---|
| (omitted) servie ID from 0 to 7 | | |
| 8 | AC_ACDU | |
| 9 | AC_ACDU_BPT | |
| 10 | DC_ACDU | |
| 11 | DC_ACDU_BPT | |
| 12 | AC_ACDS | |
| 13 | AC_ACDS_BPT | |
| 14 | DC_ACDS | |
| 15 | DC_ACDS_BPT | |

In the ServiceDetailRes message, the SECC may provide a parameter set corresponding to AC or DC parameters defined in section 8.4.3.2 of ISO20. In the ChargeParameterDiscovery and ChargeLoop messages, parameters defined to correspond to AC or DC may be provided.

AC_ChargeParameterDiscovery,
AC_ChargeLoop for AC and DC_ChargeParameterDiscovery,
DC_ChargeLoop, DC_CableCheck,
DC_PreCharge,
DC_WeldingDetection for DC

In the docking S276 and the undocking S282, the following message structures may be used according to the ACDU or the ACDS charging mode.

Table 12 shows the message structures for the ACDU_DockingReq and the ACDU_DockingRes messages.

[Table 12]

| Element Name | Element Name | Type / Description |
|---|---|---|
| ACDU_DockingReq | Header | ACDU_DockingReq Type |
| | CPState | |
| | EVProcessing | |
| | EVResult | |
| ACDU_DockingRes | Header | ACDU_DockingRes Type |
| | ResponseCode | |
| | CPState | |
| | ManPosition | |
| | EVSEProcessing | |
| | EVSEResult | |

Table 13 shows the message structures for the ACDU_UndockingReq and the ACDU_UndockingRes messages.

[Table 13]

| Element Name | Element Name | Type / Description |
|---|---|---|
| ACDU_UndockingRe q | Header | ACDU_DockingReq Type |
| | CPState | |
| | EVProcessing | |
| | EVResult | |
| ACDU_UndockingRe s | Header | ACDU_DockingRes Type |
| | ResponseCode | |
| | CPState | |
| | ManPosition | |
| | EVSEProcessing | |
| | EVSEResult | |

Table 14 shows the message structures for the ACDS_DockingReq and the ACDS_DockingRes messages.

29

[Table 14]

| Element Name | Element Name | Type / Description |
|---|---|---|
| ACDS_DockingReq | Header | ACDS_DockingReq Type |
| | CPState | |
| | EVProcessing | |
| | EVResult | |
| ACDS_DockingRes | Header | ACDS_DockingRes Type |
| | ResponseCode | |
| | CPState | |
| | ManPosition | |
| | EVSEProcessing | |
| | EVSEResult | |

Table 15 shows the message structures for the ACDS_UndockingReq and the ACDS_UndockingRes messages.

[Table 15]

| Element Name | Element Name | Type / Description |
|---|---|---|
| ACDS_UndockingRe q | Header | ACDS_DockingReq Type |
| | CPState | |
| | EVProcessing | |
| | EVResult | |
| ACDS_UndockingRes | Header | ACDS_DockingRes Type |
| | ResponseCode | |
| | CPState | |
| | ManPosition | |
| | EVSEProcessing | |
| | EVSEResult | |

According to an exemplary embodiment of the present disclosure, a Passive TDOA method may be utilized in which anchors transmit blink messages and a mobility identifies a location of the mobility from different arrival times. According to an alternative exemplary embodiment of the present disclosure, an Active TDOA method may also be utilized in which a mobility transmits blink messages and anchors identify a location of the mobility from different arrival times.

According to an alternative exemplary embodiment of the present disclosure, various methods of TDOA-based localization may be utilized.

In operation S240 of an exemplary embodiment of the present disclosure, when pairing information is not valid, an infrastructure may reject a connection.

In this case, examples of invalid pairing information may include the following:

Unknown ACD ID or mating space
Mismatching ACD ID or mating space pair
Inlet outside the mating space
Conflict with other vehicles

According to an exemplary embodiment of the present disclosure, an architecture of an infrastructure including APs and anchors may be implemented as follows:

Localization Anchors

(Choice 1) Single group of anchors

Works only for small-mid size charging sites

An e-mobility may hear only a subset of blinks from anchors, but intervals may be calculated

(Choice 2) Multiple groups of anchors

Works for larger charging sites

An EV may hear blinks only from a subset of anchors in one or more groups

An EV may utilize blinks only from anchors in the same group (but at least four of such)

Access Points

(Choice 1) Single AP per ACD without Config-Aps

All full-APs announcing anchors and an ACD of each full-AP

(Choice 2) Single AP per ACD with Config-Aps

A combination of ACD-APs and Config-Aps

(Choice 3) Minimal number of APs serving ACDs more than Aps

Only a minimum number of APs that cover a whole site

Each AP announces a subset of ACD/anchor information relevant to a transmission range of the AP

Although omitted in drawings in the exemplary embodiments of FIG. 1 to FIG. 6, information regarding a docking or mating state may further include detailed state information regarding covers of both ACDs and inlets. In addition, state information may further include fine movements during charging or an unmated state during charging.

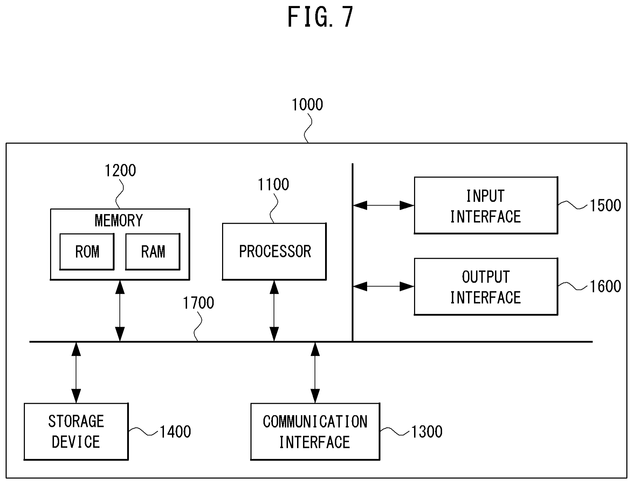

FIG. 7 is a conceptual block diagram showing an internal structure of a computing system capable of implementing a charging communication device for an onboard ACD for a vehicle and/or an offboard ACD for an EVSE, a generalized ACD, a communication/communication control device included in an ACD, an SECC, an EVCC, a WLAN AP (Access Point) arranged for an EVSE, and a short-range communication device arranged for an electric vehicle or an ACD, according to an exemplary embodiment of the present disclosure.

Although omitted in drawings in the exemplary embodiments of FIG. 1 to FIG. 6, a processor and a memory may be electronically connected to respective components, and operations of respective components may be controlled or managed by the processor.

At least a part of a process of a charging communication method for electric-vehicle charging according to an exemplary embodiment of the present disclosure may be executed by the computing system 1000 of FIG. 7.

As shown in FIG. 7, a computing system 1000 according to an exemplary embodiment of the present disclosure may be configured to include a processor 1100, a memory 1200, a communication interface 1300, a storage device 1400, an input interface 1500, an output interface 1600, and a bus 1700.

The controller or computing system 1000 according to an embodiment of the present disclosure may include at least one processor 1100 and the memory 1200 storing program instructions instructing the at least one processor 1100 to perform at least one process step. At least some of the operations or process steps of the method according to an embodiment of the present disclosure may be performed by the at least one processor 1100 loading and executing the program instructions from the memory 1200.

The processor 1100 may include a central processing unit (CPU) or a graphics processing unit (GPU) or may be implemented by another kind of dedicated processor suitable for performing the method of the present disclosure.

Each of the memory 1200 and the storage device 1400 may be comprised of at least one of a volatile storage medium and a non-volatile storage medium. For example, the memory 1200 may be comprised of at least one of a read only memory (ROM) and a random access memory (RAM).

Additionally, the controller 1000 may include the communication interface 1300 that performs communications through a wireless communication network.

Additionally, the controller 1000 may further include the storage device 1400, the input interface 1500, and the output interface 1600.

Additionally, the components of the controller 1000 may be connected to each other by the system bus 1700 to communicate with each other.

The controller 1000 according to an exemplary embodiment of the present disclosure may be any data processing device capable of communications through a network such as a desktop computer, a laptop computer, a notebook PC, a smartphone, a tablet PC, a mobile phone, a smart watch, smart glasses, an e-book reader, a portable multimedia player (PMP), a portable game console, a navigation device, a digital camera, a digital multimedia broadcasting (DMB) player, a digital audio recorder, a digital audio player, a digital video recorder, a digital video player, and a personal digital assistant (PDA).

An electric vehicle communication controller EVCC according to an exemplary embodiment of the present disclosure may be disposed in or mounted to an electric vehicle and may be the EVCC associated with a secondary assembly that receives power from a primary assembly, and may include a processor 1100 that receives at least one instruction from a memory and executes the instruction.

The processor 1100 of the EVCC may discover a first electric vehicle supply equipment EVSE within a range by using a first communication technology (operation S210), may obtain information for positioning the electric mobility to a charging location for receiving power from the first EVSE by using a second communication technology (operation S320), and, after the electric mobility is positioned to the charging location (operation S330), may perform communication connection and pairing with a supply equipment communication controller SECC of the first EVSE by using the second communication technology (operation S240).

When discovering the first EVSE by using the first communication technology (operation S210), the processor 1100 may receive beacon messages that include discovery information and configuration information in a vendor specific elements VSE field from multiple access points APs that are associated with respective EVSEs and use the first communication technology, and may determine one of the multiple EVSEs as the first EVSE. The EVSE corresponding to the closest ACD charger among the multiple EVSEs may be determined as the first EVSE.

In the EVCC according to an exemplary embodiment of the present disclosure, the configuration information may include information that describes multiple anchors that are associated with respective access points and respective EVSEs and use the second communication technology, and information that describes a charger of an ACD (Autoconnect or Automatic Charging Device) that is associated with respective EVSEs.

The information that describes the multiple anchors may include a channel or an identifier of each of the multiple anchors, and the information that describes the charger of the ACD may include an identifier of each charger of the ACD or a mating space.

When obtaining the information for positioning the electric mobility to the charging location by using the second communication technology (operation S320), the processor 1100 of the EVCC may receive blink messages that are broadcast from multiple time-synchronized anchors that use the second communication technology, and may measure a location of the electric mobility by a TDOA method that utilizes time differences among the blink messages.

An SECC according to an exemplary embodiment of the present disclosure may be the SECC associated with a primary assembly that transfers power to the electric mobility, and may include a processor 1100 that receives at least one instruction from a memory and executes the instruction.

The processor 1100 of the SECC may broadcast a beacon message that includes discovery information and configuration information in a vendor specific elements VSE field through an access point AP that uses the first communication technology (operation S210), may broadcast a blink message that has a predetermined inter-anchor interval based on synchronized time information through an anchor that uses the second communication technology (operation S320), and, after the electric mobility is positioned to the charging location for receiving power from the primary assembly (operation S330), may perform communication connection and pairing with the electric mobility by using the first communication technology (operation S240).

Meanwhile, although most of the exemplary embodiments described above have mainly explained a method in which the electric mobility or the EVCC first transmits a request, a message, or a parameter that initiates a communication protocol or a communication session in the protocol to the EVSE, the SECC, or the ACD, the present disclosure is not limited to the specific exemplary embodiment, and it is also apparent that the present disclosure may be implemented such that the EVSE, the SECC, or the ACD first transmits a request, a message, or a parameter that initiates a communication protocol or a communication session in the protocol to the electric mobility or the EVCC. In this case, the transmitter becomes the receiver, and the receiver becomes the transmitter in the corresponding exemplary embodiment, but it is apparent that substantially the same features are maintained.

The device and method according to exemplary embodiments of the present disclosure can be implemented by computer-readable program codes or instructions stored on a computer-readable intangible recording medium. The computer-readable recording medium includes all types of recording device storing data which can be read by a computer system. The computer-readable recording medium may be distributed over computer systems connected through a network so that the computer-readable program or codes may be stored and executed in a distributed manner.

The computer-readable recording medium may include a hardware device specially configured to store and execute program instructions, such as a ROM, RAM, and flash memory. The program instructions may include not only machine language codes generated by a compiler, but also high-level language codes executable by a computer using an interpreter or the like.

Some aspects of the present disclosure described above in the context of the device may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by (or using) a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure may be merely exemplary in nature and, thus, variations that do not depart from the substance of the disclosure may be intended to be within the scope of the disclosure. Such variations may not be to be regarded as a departure from the spirit and scope of the disclosure. Thus, it will be understood by those of ordinary skill in the art that various changes in form and details may be made without departing from the spirit and scope as defined by the following claims.

**Claims**

1. A communication method for charging an electric mobility, performed by an electric vehicle communication controller (EVCC) of an electric mobility, the communication method for charging an electric mobility comprising:

    discovering, by the EVCC, a first electric vehicle supply equipment (EVSE) within a range by using a first communication technology;
    obtaining, by the EVCC, information for positioning the electric mobility to a charging position for receiving power from the first EVSE by using a second communication technology; and
    after the electric mobility is positioned at the charging position, performing, by the EVCC, communication connection and pairing with a supply equipment communication controller (SECC) of the first EVSE by using the first communication technology.

2. The communication method for charging an electric mobility of claim 1, wherein the discovering of the first EVSE by using the first communication technology comprises:

    receiving, from a plurality of access points (APs) respectively associated with a plurality of EVSEs and using the first communication technology, a beacon message including a VSE (vendor specific elements) field including discovery information and configuration information; and
    determining one of the plurality of EVSEs as the first EVSE.

3. The communication method for charging an electric mobility of claim 2, wherein the configuration information comprises:

    information describing a plurality of anchors respectively associated with each of the plurality of access points and each of the plurality of EVSEs and using the second communication technology; and
    information describing a charger of an ACD (Autoconnect/Automatic Charging Device) associated with each of the plurality of EVSEs,
    wherein the information describing the plurality of anchors includes channels or identifiers of the plurality of anchors, and
    wherein the information describing the charger of the ACD includes identifiers of chargers of the ACD or mating spaces of the ACD.

4. The communication method for charging an electric mobility of claim 1, wherein the obtaining of information for positioning the electric mobility to the charging position by using the second communication technology comprises:

    receiving blink messages broadcast from a plurality of anchors using the second communication technology and time synchronized; and
    measuring a position of the electric mobility by a TDOA method using time differences among the blink messages.

5. The communication method for charging an electric mobility of claim 1, wherein the obtaining of information for positioning the electric mobility to the charging position by using the second communication technology is performed at least twice for calculating the position of the electric mobility while the electric mobility is being positioned to the charging position,
and the electric mobility is positioned to the charging position based on a calculation result of the position of the electric mobility.

6. The communication method for charging an electric mobility of claim 1, wherein the charging position is a target position of the electric mobility satisfying a condition that an inlet of the electric mobility is located within a mating space of an ACD of the first EVSE.

7. The communication method for charging an electric mobility of claim 1, wherein, in the discovering of the first EVSE, the EVCC obtains configuration information including whether the first EVSE supports an ACD function, whether the first EVSE supports the second communication technology, and an identifier of an anchor or an ACD charger associated with the first EVSE, and one or more of the obtaining of information for positioning the electric mobility to the charging position or the performing of the communication connection and pairing by using the first communication technology is performed based on the configuration information.

8. The communication method for charging an electric mobility of claim 2, wherein the performing of the communication connection and pairing with the SECC of the first EVSE by using the first communication technology comprises:

   obtaining, based on the configuration information of the first EVSE, pairing information of the first EVSE including a randomly selected pairing identifier of the electric mobility, a position of the electric mobility, an ACD identifier of a first ACD associated with the first EVSE, or a mating space of the first ACD; and
   transmitting a communication association request message including the pairing information of the first EVSE to the SECC of the first EVSE.

9. The communication method for charging an electric mobility of claim 1, after the performing of the communication connection and pairing between the EVCC and the SECC, further comprising:

   establishing a secure channel between the EVCC and the SECC;
   transmitting, through the secure channel, a pairing request message including a WLAN client MAC address of the electric mobility, a pairing identifier of the electric mobility, or location coordinates of an inlet of the electric mobility to the SECC;
   receiving, through the secure channel, a pairing response message including an ACD identifier of the SECC, an ACD mating space, or a BSSID of an AP associated with the SECC, from the SECC; and
   verifying, by the electric mobility, pairing information in the pairing response message.

10. The communication method for charging an electric mobility of claim 1, after the performing of the communication connection and pairing between the EVCC and the SECC, further comprising:

    establishing a secure channel between the EVCC and the SECC;
    exchanging, through the secure channel, temporary security information or encoded security information for checking authenticity of blink messages broadcast from a plurality of anchors using the second communication technology between the EVCC and the SECC;
    identifying, by the EVCC, the blink messages based on the temporary security information or the encoded security information, and measuring, based on time synchronization information of the plurality of anchors from the identified blink messages, a position of the electric mobility; and
    verifying, by the EVCC, whether the position of the electric mobility is within a mating space of an ACD of the first EVSE.

11. The communication method for charging an electric mobility of claim 1, wherein the first communication technology is a WLAN (Wireless LAN) technology, and the second communication technology is one of UWB, RFID, NFC, or IrDA.

12. An electric vehicle communication controller (EVCC) arranged in an electric mobility and associated with a secondary assembly receiving power from a primary assembly, the EVCC comprising:

    a processor configured to receive and execute at least one instruction from a memory,
    wherein the processor is configured to:

       discover a first electric vehicle supply equipment (EVSE) within a range by using a first communication technology;
       obtain information for positioning the electric mobility to a charging position for receiving power from the first EVSE by using a second communication technology; and
       after the electric mobility is positioned at the charging position, perform communication connection and pairing with a supply equipment communication controller (SECC) of the first EVSE by using the first communication technology.

13. The EVCC of claim 12, in the discovering of the first EVSE by using the first communication technology, wherein the processor is configured to:

receive, from a plurality of access points (APs) respectively associated with a plurality of EVSEs and using the first communication technology, a beacon message including a VSE (vendor specific elements) field including discovery information and configuration information; and
determine one of the plurality of EVSEs as the first EVSE.

14. The EVCC of claim 13, wherein the configuration information comprises:

information describing a plurality of anchors respectively associated with each of the plurality of access points and each of the plurality of EVSEs and using the second communication technology; and
information describing a charger of an ACD (Autoconnect/Automatic Charging Device) associated with each of the plurality of EVSEs,
wherein the information describing the plurality of anchors includes channels or identifiers of the plurality of anchors, and
wherein the information describing the charger of the ACD includes identifiers of chargers of the ACD or mating spaces of the ACD.

15. The EVCC of claim 12, in the obtaining of the information for positioning the electric mobility to the charging position by using the second communication technology, wherein the processor is configured to:

receive blink messages broadcast from a plurality of anchors using the second communication technology and time synchronized; and
measure a position of the electric mobility by a TDOA method using time differences among the blink messages.

16. A communication method for charging an electric mobility, performed by a supply equipment communication controller (SECC) associated with a primary assembly transmitting power to the electric mobility, the communication method for charging an electric mobility comprising:

broadcasting, through an access point using a first communication technology, a beacon message including a VSE (vendor specific elements) field including discovery information and configuration information;
broadcasting, through an anchor using a second communication technology, blink messages having a predetermined inter-anchor interval based on synchronized time information; and
after the electric mobility is positioned at a charging position for receiving power from the primary assembly, performing, by using the first communication technology, communication connection and pairing with the electric mobility.

17. The communication method for charging an electric mobility of claim 16, wherein the configuration information comprises:

information describing the anchor associated with the access point and the primary assembly and using the second communication technology; and
information describing a charger of an ACD (Autoconnect/Automatic Charging Device) associated with the primary assembly,
wherein the information describing the anchor includes a channel or an identifier of the anchor, and
wherein the information describing the charger of the ACD includes an identifier of the charger of the ACD or a mating space.

18. The communication method for charging an electric mobility of claim 16, wherein the charging position is a target position of the electric mobility satisfying a condition that an inlet of the electric mobility is located within a mating space of an ACD of the primary assembly.

19. The communication method for charging an electric mobility of claim 16, wherein the configuration information includes whether the primary assembly supports an ACD function, whether the SECC supports the second communication technology, and an identifier of the anchor or an ACD charger,

and the performing of the communication connection and pairing with the electric mobility by using the first communication technology is performed based on the configuration information.

20. The communication method for charging an electric mobility of claim 19, after the performing of the communication connection and pairing between the electric mobility and the SECC, further comprising:

establishing a secure channel between the electric mobility and the SECC;
receiving, through the secure channel, a pairing request message including a WLAN client MAC address of the electric mobility, a pairing identifier of the electric mobility, or location coordinates of an inlet of the electric mobility, from the electric mobility; and
transmitting, through the secure channel, a pairing response message including an ACD identifier of the SECC, an ACD mating space, or a BSSID of an AP associated with the SECC, to the electric mobility.

# FIG. 1

UWB-Localization (TDOA)

WLAN-Configuration (ISO15118-8)

WLAN-Charging (ISO15118-20)

EVSE
(Infra)
(110)

ACD
Offboard
Subsystem
(120)

Power Flow

ACD
Onboard
Subsystem
(130)

# FIG. 2

WLAN                    UWB                    Robotics

S210: Discovery &
      Configuration

S360: Secure Localization

S360: Secure Localization

S240: Connect & Pairing

S272: SessionSetup

S250: PairingConfirm

S260: PositionConfirm

S360: Secure Localization

. . .

S270: ISO15118-20 Charging Communication

# FIG. 3

WLAN                              UWB                         Robotics

S272: SessionSetup

S250: PairingConfirm

S260: PositionConfirm  ←→  S360: Secure Localization

S274: ServiceDisc & Auth

S276: Docking  ←————————————→  S476: Docking

S280: Charging

S282: Undocking  ←————————————→  S482: Undocking

S284: Terminate

# FIG. 4

AC(1) (124a)    Loc_AC(1)

AP(1) (122a)

Configuration information

ACD(1) (120a)

. . .

WLAN function

Electric Mobility (500)

Configuration information

AC(n) (124n)    Loc_AC(n)

AP(n) (122n)

ACD(n) (120n)

# FIG. 5

- EV measures $(a_1, a_2, a_3, a_4, ....)$
- $\Delta_{1,2}=\text{SpeedOfLight}* |a_2 - a_1 - t_\Delta|$
- ...
- $P_{EV}=\text{Func}(\Delta_{1,2}, \Delta_{2,3}, \Delta_{3,4}, \text{Loc\_AC(1)},$ ... $Loc\_AC(4))$
- If WPA2/WPA3 is imposed, EV may check the signatures

$t_1$

AC(1) (124a)

Loc_AC(1)

AP(1) (122a)

ACD(1) (120a)

blink=[1, 1, 21, 9, sig]

$a_1$

. . .

Electric Mobility (500)

$a_n$

blink=[1, 4, 21, 53, sig]

$t_{n-1}+ t_\Delta$

AC(n) (124n)

Loc_AC(n)

AP(n) (122b)

ACD(n) (120n)

$P_{EV}$

UWB function

# FIG. 6

- The current vehicle inlet is in a
  location reachable by ACD(i)

Electric
Mobility
(500)

AP(i)
(122i)

ACD(i)
(120i)

UWB function

Starting corner of bounding box

$[x_S,\ y_S,\ z_S]$

$[x_E,\ y_E,\ z_E]$

Ending corner of bounding box

# FIG. 7

## INTERNATIONAL SEARCH REPORT

| International application No. |
|---|
| **PCT/KR2024/008307** |

### A.    CLASSIFICATION OF SUBJECT MATTER
**B60L 53/30**(2019.01)i; **H04W 4/44**(2018.01)i; **H04W 4/80**(2018.01)i; **H04W 84/12**(2009.01)i; **H04W 4/40**(2018.01)i

According to International Patent Classification (IPC) or to both national classification and IPC

### B.    FIELDS SEARCHED

Minimum documentation searched (classification system followed by classification symbols)

B60L 53/30(2019.01); B60L 5/00(2006.01); B60L 50/50(2019.01); B60L 53/66(2019.01); B60L 53/68(2019.01); B60M 7/00(2006.01); G01S 5/02(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 통신(communication), 전력(power), 충전(charge), 전기차(electric vehicle), 포지셔닝(positioning)

### C.    DOCUMENTS CONSIDERED TO BE RELEVANT

| Category* | Citation of document, with indication, where appropriate, of the relevant passages | Relevant to claim No. |
|---|---|---|
| X | KR 10-2016-0032171 A (QUALCOMM INCORPORATED) 23 March 2016 (2016-03-23)<br>See paragraphs [0022]-[0148]; claim 1; and figures 1, 8a and 8b. | 1-3,5-9,11-14 |
| Y | | 4,10,15-20 |
| Y | KR 10-2018-0138067 A (GEOPLAN CO., LTD.) 28 December 2018 (2018-12-28)<br>See paragraphs [0025]-[0044]. | 4,10,15-20 |
| A | KR 10-2022-0119738 A (MERCEDES-BENZ GROUP AG) 30 August 2022 (2022-08-30)<br>See paragraphs [0025]-[0035]; and figure 1. | 1-20 |
| A | KR 10-2019-0136361 A (UNIVERSITY-INDUSTRY COOPERATION GROUP OF KYUNG HEE UNIVERSITY) 10 December 2019 (2019-12-10)<br>See paragraphs [0072]-[0092]; and figure 1. | 1-20 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 October 2024** | **04 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 729 343 A1**

**INTERNATIONAL SEARCH REPORT**

| | International application No. |
|---|---|
| | **PCT/KR2024/008307** |

**C. DOCUMENTS CONSIDERED TO BE RELEVANT**

| Category* | Citation of document, with indication, where appropriate, of the relevant passages | Relevant to claim No. |
|---|---|---|
| A | JP 2023-500740 A (WITRICITY CORPORATION) 10 January 2023 (2023-01-10) See paragraphs [0013]-[0040]; and figures 1-2. | 1-20 |

Form PCT/ISA/210 (second sheet) (July 2022)

# EP 4 729 343 A1

## INTERNATIONAL SEARCH REPORT
### Information on patent family members

International application No.

**PCT/KR2024/008307**

| Patent document cited in search report | | | Publication date (day/month/year) | Patent family member(s) | | | Publication date (day/month/year) |
|---|---|---|---|---|---|---|---|
| KR | 10-2016-0032171 | A | 23 March 2016 | CA | 2914062 | A1 | 22 January 2015 |
| | | | | CA | 2914062 | C | 23 April 2019 |
| | | | | CN | 105377621 | A | 02 March 2016 |
| | | | | CN | 105377621 | B | 30 June 2017 |
| | | | | CN | 107253446 | A | 17 October 2017 |
| | | | | CN | 107253446 | B | 28 May 2019 |
| | | | | EP | 3013628 | A2 | 04 May 2016 |
| | | | | EP | 3013628 | B1 | 19 October 2016 |
| | | | | ES | 2608386 | T3 | 10 April 2017 |
| | | | | HU | E031259 | T2 | 28 July 2017 |
| | | | | JP | 2016-533150 | A | 20 October 2016 |
| | | | | JP | 2019-068734 | A | 25 April 2019 |
| | | | | JP | 6662770 | B2 | 11 March 2020 |
| | | | | TW | 201515873 | A | 01 May 2015 |
| | | | | TW | 201801957 | A | 16 January 2018 |
| | | | | TW | 201919930 | A | 01 June 2019 |
| | | | | TW | I604974 | B | 11 November 2017 |
| | | | | TW | I649223 | B | 01 February 2019 |
| | | | | TW | I702156 | B | 21 August 2020 |
| | | | | US | 10300805 | B2 | 28 May 2019 |
| | | | | US | 2015-0015419 | A1 | 15 January 2015 |
| | | | | US | 2017-0101024 | A1 | 13 April 2017 |
| | | | | US | 2018-0272885 | A1 | 27 September 2018 |
| | | | | US | 9446674 | B2 | 20 September 2016 |
| | | | | US | 9925886 | B2 | 27 March 2018 |
| | | | | WO | 2015-009482 | A2 | 22 January 2015 |
| | | | | WO | 2015-009482 | A3 | 16 April 2015 |
| KR | 10-2018-0138067 | A | 28 December 2018 | KR | 10-2112906 | B1 | 19 May 2020 |
| KR | 10-2022-0119738 | A | 30 August 2022 | CN | 115210105 | A | 18 October 2022 |
| | | | | EP | 3927576 | A1 | 29 December 2021 |
| | | | | GB | 202003192 | D0 | 22 April 2020 |
| | | | | GB | 2592644 | A | 08 September 2021 |
| | | | | JP | 2023-515113 | A | 12 April 2023 |
| | | | | JP | 7425888 | B2 | 31 January 2024 |
| | | | | US | 2023-0094609 | A1 | 30 March 2023 |
| | | | | WO | 2021-175596 | A1 | 10 September 2021 |
| KR | 10-2019-0136361 | A | 10 December 2019 | KR | 10-2110836 | B1 | 14 May 2020 |
| JP | 2023-500740 | A | 10 January 2023 | CN | 114867631 | A | 05 August 2022 |
| | | | | CN | 114867631 | B | 04 August 2023 |
| | | | | EP | 4077030 | A1 | 26 October 2022 |
| | | | | JP | 7379711 | B2 | 14 November 2023 |
| | | | | KR | 10-2022-0103813 | A | 22 July 2022 |
| | | | | KR | 10-2022-0119770 | A | 30 August 2022 |
| | | | | KR | 10-2437818 | B1 | 30 August 2022 |
| | | | | US | 11452028 | B2 | 20 September 2022 |
| | | | | US | 2021-0195501 | A1 | 24 June 2021 |
| | | | | US | 2022-0386221 | A1 | 01 December 2022 |
| | | | | WO | 2021-127619 | A1 | 24 June 2021 |

Form PCT/ISA/210 (patent family annex) (July 2022)